# EUROPEAN PATENT APPLICATION

(11) **EP 4 831 061 A1**
(43) Date of publication of application: **28.10.2026**
(21) Application number: 24918577.8
(22) Date of filing: 27.11.2024
(51) Int. Cl.: B64D 11/02, E06B 3/46, E06B 3/48

(54) **PRIVATE ROOM STRUCTURE CAPABLE OF BEING MOUNTED IN AIRCRAFT**

(30) Priority: 17.01.2024 JP 2024004928
(71) Applicant: JAMCO CORPORATION, Mitaka-shi, Tokyo 181-0015 (JP); Japan Aerospace Exploration Agency, Tokyo 182-8522 (JP)
(72) Inventor: HAGIWARA, Hisaya, Tachikawa-shi, Tokyo 190-0011 (JP); HANASAKI, Yosuke, Tachikawa-shi, Tokyo 190-0011 (JP); MATSUDA, Takamasa, Tachikawa-shi, Tokyo 190-0011 (JP); OGAWA, Kenichi, Tachikawa-shi, Tokyo 190-0011 (JP); YASUOKA, Tetsuo, Chofu-shi, Tokyo 182-8522 (JP); YAMADA, Kouichi, Chofu-shi, Tokyo 182-8522 (JP); NAKAJIMA, Tokuaki, Chofu-shi, Tokyo 182-8522 (JP); KISHI, Yuki, Chofu-shi, Tokyo 182-8522 (JP)
(74) Representative: Novaimo
(86) International application number: PCT/JP2024/041894
(87) International publication number: WO 2025/154402

(57) **Abstract**

The present invention provides a private room structure capable of being mounted in an aircraft and capable of increasing a space occupied by a lavatory while suppressing a decrease in the number of seats. A private room structure capable of being mounted in an aircraft includes an outer shell including at least a front wall and a pair of side walls that intersect the front wall, and installed in a fuselage of the aircraft, a variable wall including a fixed wall connected to the outer shell, and a movable wall configured movably with respect to the fuselage, a partition installed in the fuselage in a manner separated from the outer shell and facing the front wall on a side opposite from the front wall with the side walls interposed therebetween, a multi-use passage formed between the outer shell and the partition, and a door that serves as a wall and that is configured to cover a gap between the movable wall and the outer shell.

## Description

### [Technical Field]

The present invention relates to private room structures capable of being mounted in aircraft.

### [Background Art]

In passenger aircraft having two or more aisles, so-called wide-body aircraft, it is required by law to provide one or more lavatories, i.e., toilets on the aircraft, that can be used by passengers using wheelchairs. Meanwhile, a private room of a general lavatory for a passenger is relatively small, such as having an external dimension of 38 in × 41 in (965 mm × 1041 mm) in planar view, such that it is difficult for passengers on a wheelchair to enter the private room.

In order to facilitate use of the lavatory by a passenger on a wheelchair, for example, it may be possible to install a large private room having an external dimension of 56 in × 41 in (1422 mm × 1041 mm) in planar view, or to remove an inner wall between two adjacent private rooms of a standard lavatory to use them as one private room, as disclosed in Patent Literature 1.

### [Citation List]

### [Patent Literature]

[PTL 1] WO 2014/141701

### [Summary of Invention]

### [Technical Problem]

When a passenger on a wheelchair uses a private room of a lavatory, it may not always be the case where the passenger can move by himself/herself from the wheelchair to a toilet seat, and in some cases, the passenger must ask for assistance of a carer to move from the wheelchair to the toilet seat. In the latter case, regarding the private room of a lavatory on a passenger aircraft, even a large-sized private room that can be used by a passenger on a wheelchair does not offer enough space for a carer to enter, such that appropriate assistance may not be provided.

Meanwhile, since a cabin space of an aircraft has extremely limited space, if the private room of a lavatory is to be expanded to a size larger than the current size, the number of seats must be reduced, such that the number of passengers that may board the aircraft will be reduced.

The present invention aims at solving the problem described above, and provides a private room structure that can be mounted in an aircraft and that can increase the space occupied by the lavatory while suppressing a decrease in the number of seats.

### [Solution to Problem]

In order to achieve the object mentioned above, a private room structure capable of being mounted in an aircraft according to the present invention includes:
an outer shell including at least a front wall and a pair of side walls that intersect the front wall, and installed in a fuselage of the aircraft;
a variable wall including a fixed wall connected to the outer shell, and a movable wall configured movably with respect to the fuselage;
a partition installed in the fuselage in a manner separated from the outer shell and facing the front wall on a side opposite from the front wall with the side walls interposed therebetween;
a multi-use passage formed between the outer shell and the partition; and
a door that serves as a wall and that is configured to cover a gap between the movable wall and the outer shell.

A private room structure capable of being mounted in an aircraft according to the present invention includes:
an outer shell including a front wall, a first side wall and a second side wall that intersect the front wall, a first rear side wall joined to the first side wall, and a second rear side wall joined to the second side wall, the outer shell being installed in a fuselage of the aircraft;
a variable wall including a fixed wall connected to the front wall, and a movable wall configured movably with respect to the outer shell;
a partition installed in the fuselage in a manner separated from the outer shell and facing the front wall on a side opposite from the front wall with the outer shell interposed therebetween;
a multi-use passage formed between the outer shell and the partition; and
a door that serves as a wall and that is configured to be opened and closed,
wherein, in a state where the door that serves as a wall that covers a gap between the second rear side wall and the movable wall, a small-sized main lavatory private room surrounded by the front wall, the variable wall, the second side wall, the second rear side wall, and the door that serves as a wall is formed, and
wherein, by connecting the door that serves as a wall to the partition, a middle-sized main lavatory private room surrounded by the front wall, the variable wall, the door that serves as a wall, the partition, and the second side wall, and including a portion of the multi-use passage is formed.

A private room structure capable of being mounted in an aircraft according to the present invention includes:
an outer shell including a front wall, a first side wall and a second side wall that intersect the front wall, a first rear side wall joined to the first side wall, and a second rear side wall joined to the second side wall, the outer shell being installed in a fuselage of the aircraft;
a variable wall including a fixed wall connected to the front wall, and a movable wall configured movably with respect to the fixed wall;
a partition installed in the fuselage in a manner separated from the outer shell and facing the front wall on a side opposite from the front wall with the outer shell interposed therebetween;
a multi-use passage formed between the outer shell and the partition; and
a sliding door configured to cover a gap between the movable wall and the second rear side wall,
wherein, in a state where the fixed wall and the movable wall are connected, when the sliding door covers a gap between the second rear side wall and the movable wall, a small-sized main lavatory private room surrounded by the front wall, the variable wall, the second side wall, the second rear side wall, and the sliding door is formed, and
wherein, by moving the movable wall to the first side wall side, a large-sized main lavatory private room surrounded by the front wall, the variable wall, the partition, and the second side wall, and including at least a portion of the multi-use passage is formed.

A private room structure capable of being mounted in an aircraft according to the present invention includes:
an outer shell including a front wall, a first side wall and a second side wall that intersect the front wall, a first rear side wall joined to the first side wall, and a second rear side wall joined to the second side wall, the outer shell being installed in a fuselage of the aircraft;
a fixed wall connected to the front wall;
a movable wall configured slidably along a rail disposed on a ceiling;
a partition installed in the fuselage in a manner separated from the outer shell and facing the front wall on a side opposite from the front wall with the outer shell interposed therebetween;
a multi-use passage formed between the outer shell and the partition; and
a door configured to cover a gap between the movable wall and the second rear side wall,
wherein, in a state where the fixed wall and the movable wall are connected, when the door covers a gap between the second rear side wall and the movable wall, a small-sized main lavatory private room surrounded by the front wall, the fixed wall, the variable wall, the second side wall, the second rear side wall, and the door is formed, and
wherein, by sliding the movable wall to the first side wall side, a large-sized main lavatory private room surrounded by the front wall, the movable wall, the partition, and the second side wall and including at least a portion of the multi-use passage is formed.

A private room structure capable of being mounted in an aircraft according to the present invention includes:
an outer shell including a front wall, a first side wall and a second side wall that intersect the front wall, a first rear side wall joined to the first side wall, and a second rear side wall joined to the second side wall, the outer shell being installed in a fuselage of the aircraft;
a fixed wall connected to the front wall;
a movable wall configured rotatably with respect to the second rear side wall;
a partition installed in the fuselage in a manner separated from the outer shell and facing the front wall on a side opposite from the front wall with the outer shell interposed therebetween;
a multi-use passage formed between the outer shell and the partition; and
a door configured rotatably with respect to the movable wall,
wherein, in a state where the door covers a gap between the fixed wall and the movable wall, a small-sized main lavatory private room surrounded by the front wall, the fixed wall, the door, the second side wall, the second rear side wall, and the movable wall is formed, and
wherein, by rotating the door and connecting the door with the first side wall, a middle-sized main lavatory private room surrounded by the front wall, the first side wall, the first rear side wall, the second side wall, the second rear side wall, the movable wall, and the door is formed.

### [Advantageous Effects of Invention]

According to the present invention, a private room structure that can be mounted in an aircraft and that can increase the space occupied by the lavatory while suppressing a decrease in the number of seats can be provided.

### [Brief Description of Drawings]

FIG. 1 is a plan view illustrating a vicinity of a lavatory of an aircraft in enlarged view.
FIG. 2A is a plan view of a private room structure according to a first embodiment in enlarged view, illustrating a first form.
FIG. 2B is a plan view of the private room structure according to the first embodiment in enlarged view, illustrating a second form.
FIG. 2C is a plan view of the private room structure according to the first embodiment in enlarged view, illustrating a third form.
FIG. 3A is a perspective view of an intermediate wall illustrated together with a door, illustrating a state in which the door is aligned with the intermediate wall.
FIG. 3B is a perspective view of the intermediate wall illustrated together with the door, illustrating a state in which the door is rotated by 90 degrees with respect to the intermediate wall.
FIG. 3C is a perspective view of the intermediate wall illustrated together with the door, illustrating a state in which the door is rotated until the door is folded against, i.e. abutted on, the intermediate wall.
FIG. 4A is a perspective view of one example of a lock mechanism, illustrating a stored state in which a pin is drawn in.
FIG. 4B is a perspective view of one example of a lock mechanism, illustrating an intermediate state in which the pin is slightly projected.
FIG. 4C is a perspective view of one example of a lock mechanism, illustrating a projected state in which the pin is completely projected.
FIG. 5A is a plan view of a private room structure according to a second embodiment in enlarged view, illustrating a first form.
FIG. 5B is a plan view of the private room structure according to the second embodiment in enlarged view, illustrating a second form.
FIG. 5C is a plan view of the private room structure according to the second embodiment in enlarged view, illustrating a third form.
FIG. 5D is a perspective view in which the private room structure according to the second embodiment is used as a first aid room.
FIG. 6A is a plan view of a private room structure according to a third embodiment in enlarged view, illustrating a first form.
FIG. 6B is a plan view of the private room structure according to the third embodiment in enlarged view, illustrating a second form.
FIG. 6C is a plan view of the private room structure according to the third embodiment in enlarged view, illustrating a third form.
FIG. 7A is a plan view of a private room structure according to a fourth embodiment in enlarged view, illustrating a first form.
FIG. 7B is a plan view of the private room structure according to the fourth embodiment in enlarged view, illustrating a second form.
FIG. 7C is a plan view of the private room structure according to the fourth embodiment in enlarged view, illustrating a third form.
FIG. 8A is a plan view of a private room structure according to a fifth embodiment in enlarged view, illustrating a first form.
FIG. 8B is a plan view of the private room structure according to the fifth embodiment in enlarged view, illustrating a second form.
FIG. 9A is a plan view of a private room structure according to a sixth embodiment in enlarged view, illustrating a first form.
FIG. 9B is a plan view of the private room structure according to the sixth embodiment in enlarged view, illustrating a second form.
FIG. 9C is a plan view of the private room structure according to the sixth embodiment in enlarged view, illustrating a third form.
FIG. 10A is a plan view of a private room structure according to a seventh embodiment in enlarged view, illustrating a first form.
FIG. 10B is a plan view of the private room structure according to the seventh embodiment in enlarged view, illustrating a second form.
FIG. 10C is a plan view of the private room structure according to the seventh embodiment in enlarged view, illustrating a third form.
FIG. 11A is a plan view of a private room structure according to an eighth embodiment in enlarged view, illustrating a first form.
FIG. 11B is a plan view of the private room structure according to the eighth embodiment in enlarged view, illustrating a second form.
FIG. 12 is a perspective view schematically illustrating a slidable movable wall.
FIG. 13A is a plan view of a private room structure according to a ninth embodiment in enlarged view, illustrating a first form.
FIG. 13B is a plan view of the private room structure according to the ninth embodiment in enlarged view, illustrating a second form.
FIG. 14A is a plan view of a private room structure according to a tenth embodiment in enlarged view, illustrating a first form.
FIG. 14B is a plan view of the private room structure according to the tenth embodiment in enlarged view, illustrating a second form.
FIG. 15 is a view illustrating an example of interior components installed in a lavatory private room.
FIG. 16 is a view illustrating an example of interior components installed in a powder room.
FIG. 17 is a view illustrating another example of interior components installed in the powder room.

### [Description of Embodiments]

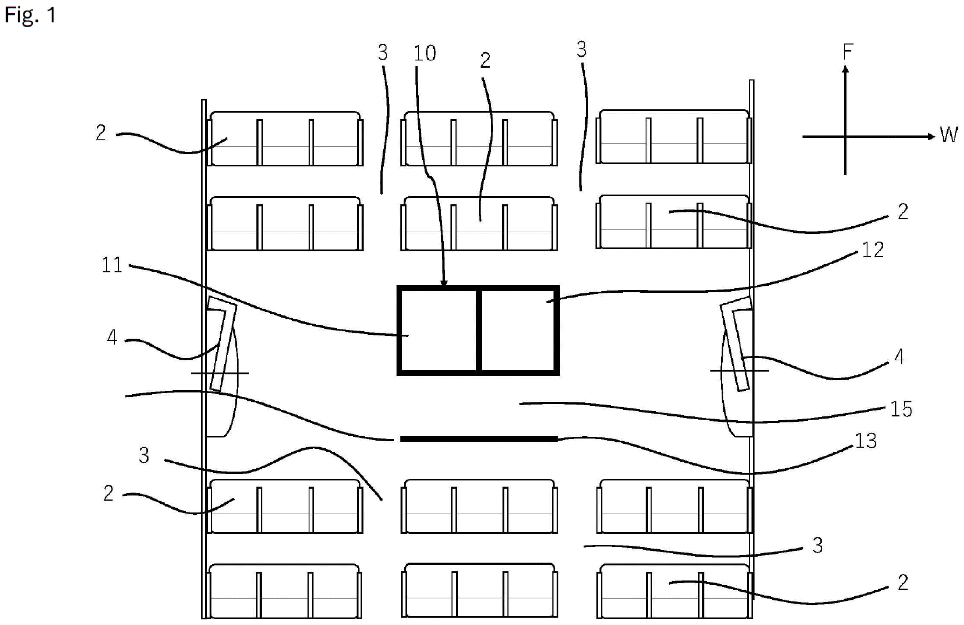

A private room structure capable of being mounted in an aircraft according to the present invention will be described with reference to the drawings. FIG. 1 is a plan view illustrating a vicinity of a lavatory in an aircraft 1 in enlarged view. A travelling direction of the aircraft is illustrated by arrow F, and a width direction is illustrated by arrow W in FIG. 1.

In a cabin of the aircraft 1, according to the illustrated example, seat units 2 in each of which three seats are aligned in a width direction W are arranged in three rows in the width direction W, and a longitudinal aisle 3 is disposed between the seat units 2.

Fuselage doors 4 are disposed on both sides of the aircraft 1, and in an area sandwiched between the two fuselage doors 4, a distance between the seat units 2 in a travelling direction F is relatively widened to form an aisle connecting the fuselage doors 4 disposed on both sides, wherein this aisle is referred to as a cross aisle. According to the present embodiment, a private room structure 10 is disposed in the cross aisle. In the present specification, the terms "small-sized", "middle-sized", and "large-sized" mean that a spatial volume of a middle-sized space is greater than a spatial volume of a small-sized space, and a spatial volume of a large-sized space is greater than the spatial volume of the middle-sized space.

### (First Embodiment)

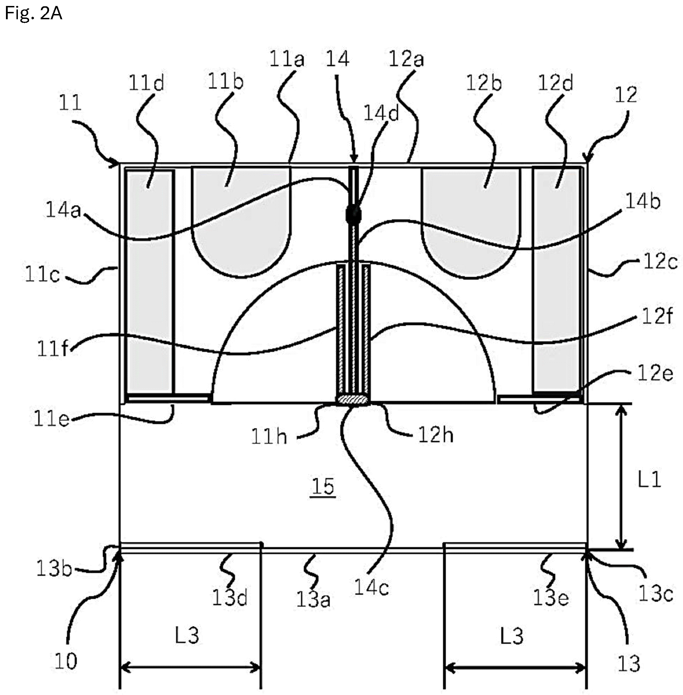

FIGs. 2A to 2C are each a plan view of the private room structure 10 according to the first embodiment in enlarged view. The private room structure 10 includes two lavatory private rooms 11 and 12 aligned in the width direction W, a partition 13 disposed rearward in the travelling direction with respect to the lavatory private rooms 11 and 12, and a multi-use passage 15 formed between the lavatory private rooms 11 and 12 and the partition 13. A distance between the lavatory private rooms 11 and 12 and the partition 13, that is, a passage width of the multi-use passage 15, is denoted as L1. Including embodiments described below, it may be possible to have the lavatory private rooms 11 and 12 disposed rearward in the travelling direction of the aircraft 1, and the partition 13 disposed frontward in the travelling direction.

In the lavatory private room, also referred to as a sub lavatory private room, 11, a toilet seat 11b is disposed in contact with a front wall 11a arranged frontward in the travelling direction, and a washbasin 11d is disposed on a side wall, also referred to as a first side wall, 11c on a side opposite from the lavatory private room 12. The washbasin 11d extends from the front wall 11a to a rear wall, also referred to a first rear side wall, 11e disposed rearward in the travelling direction. The rear wall 11e extends for a predetermined distance in parallel with the front wall 11a from the side wall 11c, and can be connected to a door 11f. Upper and lower ends of the front wall 11a, the side wall 11c, and the rear wall 11e are fixed to the fuselage of the aircraft 1.

In the lavatory private room, also referred to as a main lavatory private room, 12, a toilet seat 12b is disposed in contact with a front wall 12a arranged frontward in the travelling direction aligned with the front wall 11a, and a washbasin 12d is disposed on a side wall, also referred to as a second side wall, 12c that is in parallel with the side wall 11c on a side opposite from the lavatory private room 11. The washbasin 12d extends from the front wall 12a to a rear wall, also referred to a second rear side wall, 12e disposed rearward in the travelling direction. The rear wall 12e extends for a predetermined distance in parallel with the front wall 12a from the side wall 12c facing the rear wall 12e, and can be connected to a door 12f. Upper and lower ends of the front wall 12a, the side wall 12c, and the rear wall 12e are fixed to the fuselage of the aircraft 1.

The lavatory private rooms 11 and 12 can have symmetrical shapes with an intermediate wall, also referred to as a variable wall, 14 interposed therebetween, as illustrated in FIG. 2A, wherein the toilet seats and the washbasins are disposed symmetrically with the intermediate wall 14 interposed therebetween. The intermediate wall 14 serves as a partition between the lavatory private rooms 11 and 12. The front walls 11a and 12a forming the front wall of the lavatory private rooms 11 and 12 can be a single wall. Further, the rear walls 11e and 12e constitute the rear side wall. Further, the front walls 11a and 12a, the side walls 11c and 12c, and the rear walls 11e and 12e constitute an outer shell. There can be an outer shell that does not include the rear wall 11e.

The intermediate wall 14 extends in parallel with the side walls 11c and 12c, and includes a fixed wall 14a fixed and connected to the front walls 11a and 12a, a movable wall 14b pivotable with respect to an edge of the fixed wall 14a, and a plate-shaped supporting portion 14c having a center portion connected to an edge of the movable wall 14b. The supporting portion 14c is in plane with the rear walls 11e and 12e, wherein an edge on the rear wall 11e side of the supporting portion 14c has the door 11f pivotably connected thereto via a door hinge 11h having a rotation axis perpendicular to the floor, and an edge on the rear wall 12e side of the supporting portion 14c has the door 12f pivotably connected thereto via a door hinge 12h having a rotation axis perpendicular to the floor. At least one of the doors 11f and 12f constitutes a door that serves as a wall.

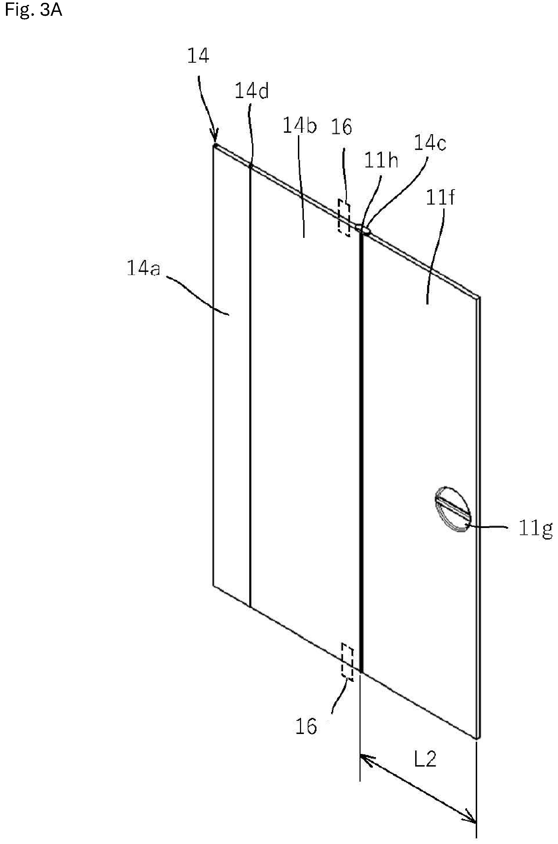

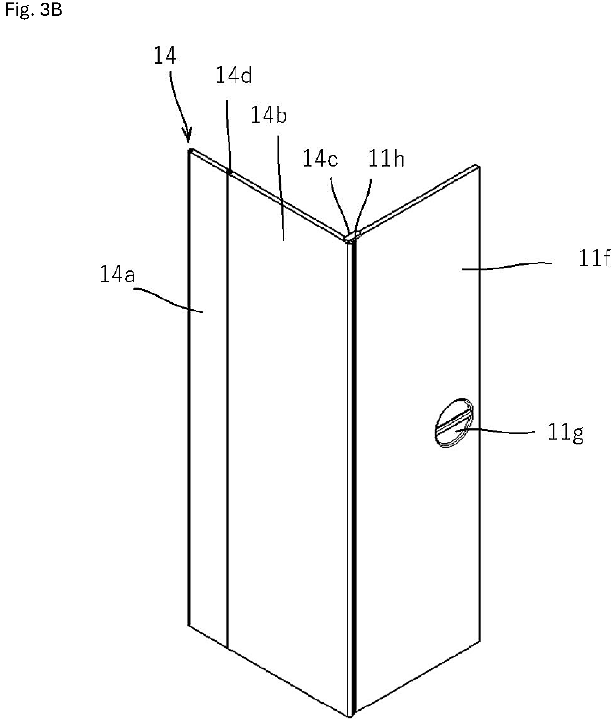

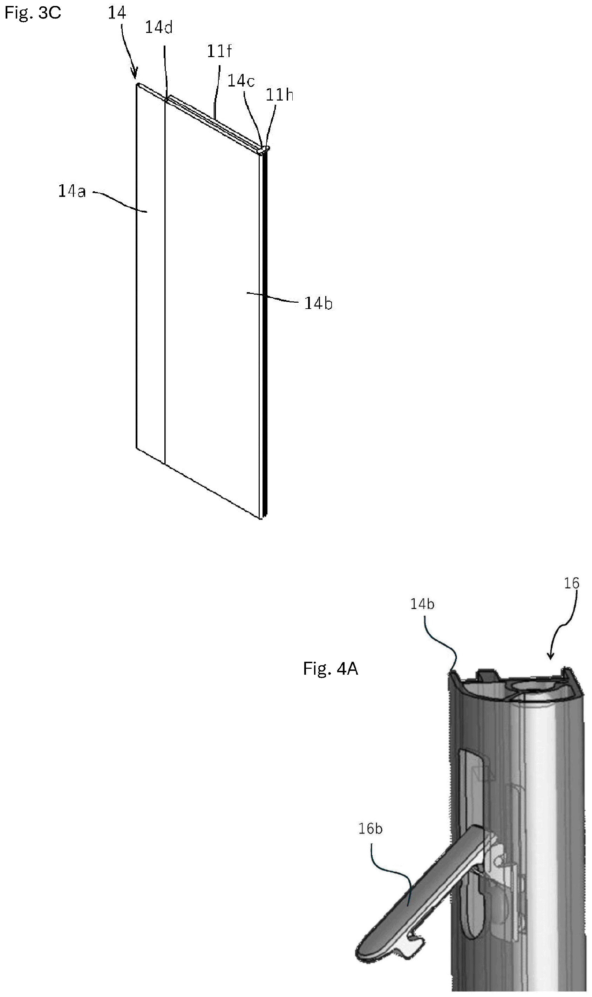

FIGs. 3A to 3C are each a perspective view of the intermediate wall 14, wherein the view is shown with only the door 11f attached for easier understanding. If a width of the door 11f is denoted as L2, L2 = L1. The door 11f includes a door lock 11g. The door lock 11g is a type of lock where a key expands and contracts or a hook is engaged or disengaged by operating a lever, which is used generally such that the description thereof is omitted. A similar door lock is disposed on the door 12f, and also on passage doors 13d and 13e described below.

The fixed wall 14a and the movable wall 14b are connected via a hinge 14d having a rotation axis perpendicular to the floor, and the movable wall 14b is rotatable with respect to the fixed wall 14a by the hinge 14d. Further, the movable wall 14b has a lock mechanism 16 disposed at one or two locations on an upper end and/or a lower end near the door 11f. In a case where the lock mechanism 16 is disposed at two locations on the upper and lower ends thereof, it is preferable that both lock mechanisms 16 are arranged close to both edges in the width direction, and in a case where the lock mechanism 16 is disposed at one location on the upper or lower end thereof, it is preferable that the lock mechanism 16 is arranged close to the edge distant from the hinge 14d.

FIGs. 4A to 4C are each a perspective view illustrating one example of the lock mechanism 16. The lock mechanism 16 has a pin 16a that is disposed in an inner space of the movable wall 14b and that is movable between an upper position and a lower position, and a lever 16b. Further, a hole (not shown) capable of having the pin 16a fit thereto is formed on a ceiling and/or a floor, included in the lavatory or the fuselage, the same applies hereafter, facing the pin 16a.

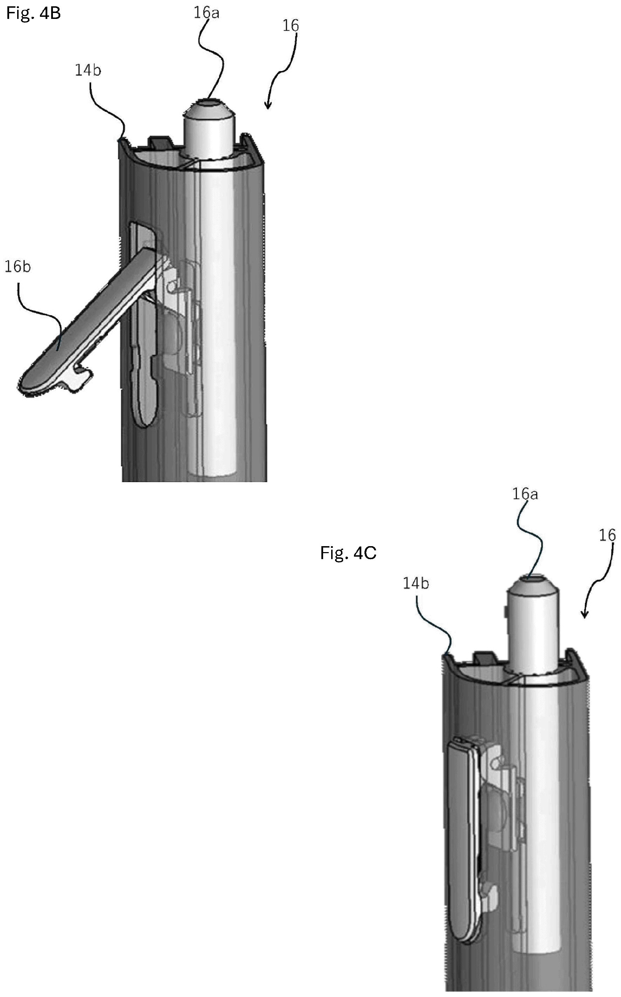

An end portion of the lever 16b is connected to the pin 16a, and by moving the lever 16b from the lower position illustrated in FIG. 4A upward as illustrated in FIG. 4B, the pin 16a is elevated. In a state where the pin 16a elevates to the upper position as illustrated in FIG. 4C, the pin 16a fits to the hole not shown and realizes a locked state. In a state where the pin 16a moves to the upper position, by tilting the lever 16b into the accommodating position of the movable wall 14b, the position of the projected pin 16a is fixed, and the locked state in which the pin 16a is engaged to the hole is maintained. The configuration of the lock mechanism 16 is not limited to the above-described configuration.

In FIGs. 3A to 3C, in the locked state in which the pins 16a of the lock mechanism 16 disposed on upper and lower ends of the movable wall 14b are fit to holes not shown, the movable wall 14b will not rotate with respect to the fixed wall 14a, and only the door 11f, or the door 12, rotates with respect to the movable wall 14b.

As illustrated in FIG. 2A, the partition 13 includes a fixed partition wall 13a that is attached to the floor and the ceiling and that extends in a perpendicular direction, and passage doors 13d and 13e that are connected via hinges 13b and 13c to both ends of the fixed partition wall 13a. The passage doors 13d and 13e are rotatable with respect to the fixed partition wall 13a by the hinges 13b and 13c having rotation axes perpendicular to the floor. If the width of the passage doors 13d and 13e is denoted as L3, L3 = L1. The passage doors 13d and 13e can also be doors that are opened and closed by sliding with respect to the side walls 11c and 12c or to the fixed partition wall 13a.

### (First Form)

FIG. 2A illustrates a first form of the private room structure 10 according to the present embodiment. In the first form, the movable wall 14b is fixed by the lock mechanism 16. Further, the passage doors 13d and 13e are rotated so as to adhere closely with the fixed partition wall 13a, and fixed by a fixture, a strap or the like not shown in the closely adhered state. In this state, the multi-use passage 15 can be used as a passage through which the passengers and crews may pass.

Further, the intermediate wall 14 is fixed and functions as a fixed wall. The doors 11f and 12f are each rotatable with respect to the supporting portion 14c. Therefore, by connecting the doors 11f and 12f to the rear walls 11e and 12e and locking the door from the inner side, the lavatory private room 11 and the lavatory private room 12 each having a small-sized and having their circumferences surrounded by the front walls 11a and 12a, the side walls 11c and 12c, the rear walls 11e and 12e, the intermediate wall 14, and the doors 11f and 12f are formed, and the lavatory private rooms 11 and 12 can each be used independently. Further, by opening the doors 11f and 12f, the passengers can exit and enter the lavatory private room 11 and the lavatory private room 12 through the multi-use passage 15.

### (Second Form)

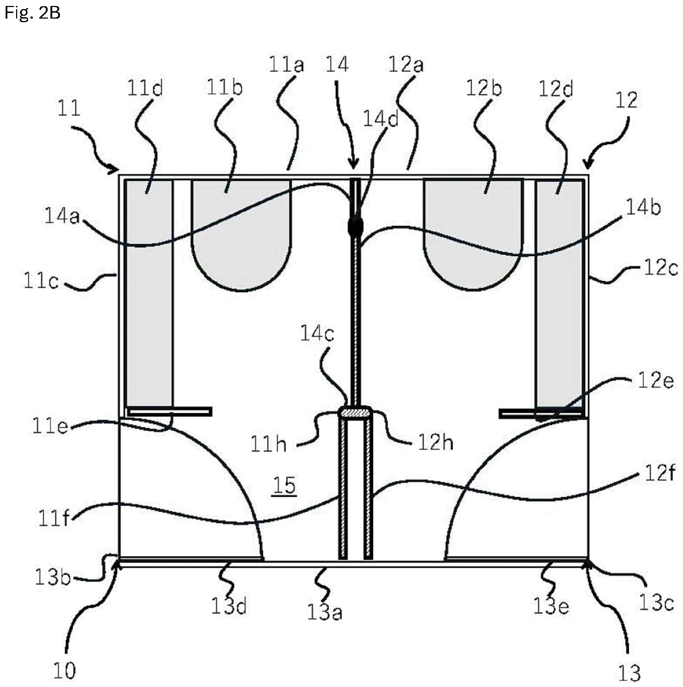

FIG. 2B illustrates a second form of the private room structure 10 according to the present embodiment. In the second form, similar to the first form, the movable wall 14b connected to the supporting portion 14c is fixed to the ceiling and the floor by the lock mechanism 16, wherein the doors 11f and 12f are rotated to the fixed partition wall 13a side, fixed to the fixed partition wall 13a by the door lock 11g or the like, such that the multi-use passage 15 is partitioned. Since a width L2 of the doors 11f and 12f is equal to a width L1 of the multi-use passage 15, there is very little gap between the locked doors 11f and 12f and the fixed partition wall 13a, such that the lavatory private room 11 and the lavatory private room 12 can be used in a state expanded to the multi-use passage 15 side. That is, the lavatory private room 11 and the lavatory private room 12 each having a middle-sized and having their circumferences surrounded by the front walls 11a and 12a, the side walls 11c and 12c, the intermediate wall 14, the doors 11f and 12f, and the partition 13 are formed.

In this state, by having the passage doors 13d and 13e rotate via the hinges 13b and 13c with respect to both edges of the fixed partition wall 13a, connecting the passage doors 13d and 13e to the side walls 11c and 12c and locking the doors from the inside, the lavatory private room 11 and the lavatory private room 12 in an expanded state can each be used as independent closed spaces without deteriorating privacy. Further, by opening the passage doors 13d and 13e, the passengers can enter and exit the lavatory private room 11 and the lavatory private room 12 in the expanded state. A passenger using a wheelchair can enter the lavatory private room 11 and the lavatory private room 12 expanded to include the multi-use passage 15, and the passenger can use the lavatory by moving from the wheelchair to the toilet seat by him/herself.

### (Third Form)

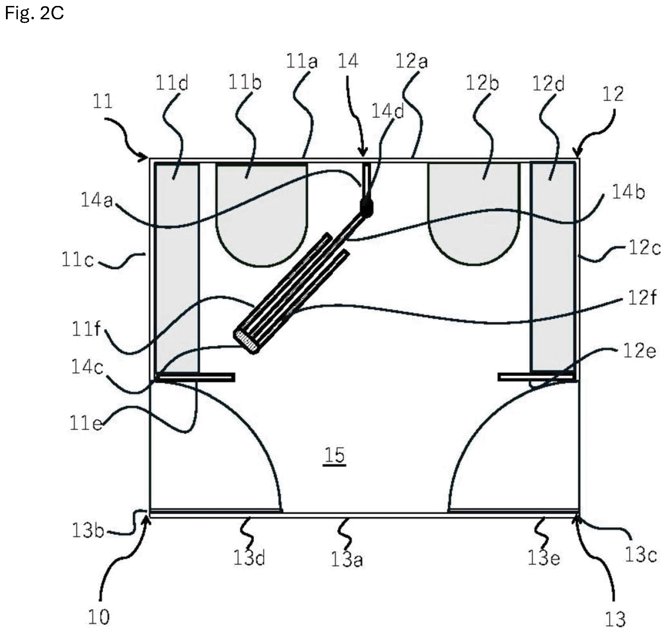

FIG. 2C illustrates a third form of the private room structure 10 according to the present embodiment. In the third form, the doors 11f and 12f are adhered closely to both sides of the fixed wall 14a and fixed thereto by a fixture, a strap or the like, and the lock mechanism 16 is released, by which the movable wall 14b is rotated toward the lavatory private room 11 side. It may be possible to provide a limit of rotation on the ceiling to limit the rotation of the movable wall 14b, or the door 11f, by abutting therewith and fixing the same so as to prevent the movable wall 14b, or the door 11f, from colliding with the toilet seat 11b. The same applies to the embodiments described hereinafter.

By rotating the movable wall 14b, the lavatory private room 11 cannot be used, but by rotating the movable wall 14b to a side moving away from the side wall 12c, the space of the lavatory private room 12 can be expanded to include a portion of the lavatory private room 11 and the entirety of the multi-use passage 15, such that a large-sized lavatory is realized. In other words, the lavatory private room 12 having a large size and having its circumference surrounded by the front wall 12a, the intermediate wall 14, the rear wall 11e, the side wall 12c, and the partition 13 is formed. Further, by connecting the passage doors 13d and 13e to the side walls 11c and 12c and locking the doors from the inside, a wide closed space that does not deteriorate privacy can be ensured. Therefore, in a case where a passenger using a wheelchair who needs assistance when using the lavatory enters the lavatory private room 12, the carer can also enter the lavatory private room 12 to provide assistance. In this state, if the passenger on the wheelchair enters through the passage door 13e, the carer can enter through the passage door 13d on the opposite side, such that their paths do not overlap, and efficient use of the lavatory can be realized.

According to the present embodiment, a large space that utilizes two adjacent lavatory private rooms 11 and 12 and the multi-use passage adjacent to the lavatory private rooms can be formed. That is, by using the doors 11f and 12f of the lavatory private rooms 11 and 12 and the partition 13, and by disposing the passage doors 13d and 13e enclosing the multi-use passage 15, a large-sized space that ensures privacy can be formed. The size of this space has, for example in planar view, an external dimension of 76 in × 64 in (1930 mm × 1625 mm).

### (Second Embodiment)

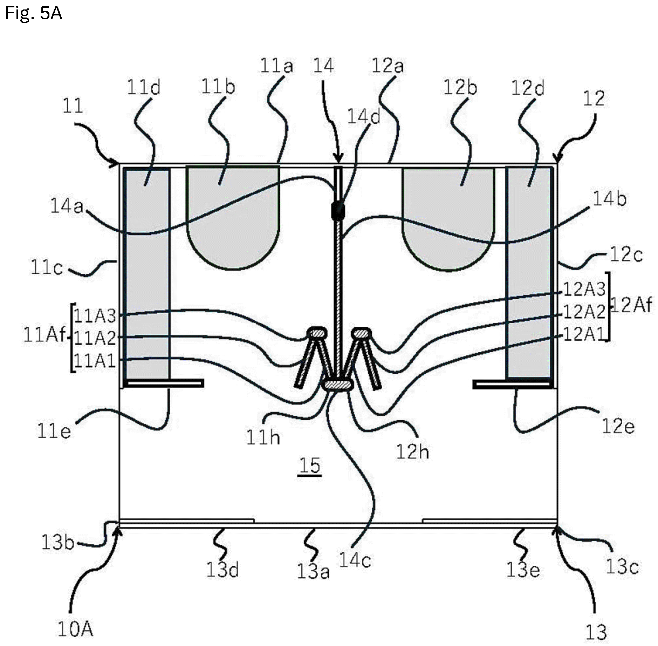

FIGs. 5A to 5C are each a plan view illustrating a private room structure 10A according to a second embodiment in enlarged view. In the present embodiment, compared to the first embodiment, doors 11Af and 12Af of the lavatory private rooms 11 and 12 are bifold type, i.e., folding type, doors. The other configurations are similar to the first embodiment, such that the descriptions thereof are omitted. The same descriptions are similarly omitted in the description of embodiments hereafter.

The door 11Af includes a first plate 11A1 having a longitudinally rectangular shape, a second plate 11A2 having an approximately equivalent shape as the first plate 11A1, and a sub door hinge 11A3 that connects the first plate 11A1 and the second plate 11A2. The first plate 11A1 is connected pivotably by the door hinger 11h to the supporting portion 14c. A door lock (not shown) is disposed on the second plate 11A2. In a state where the first plate 11A1 and the second plate 11A2 are aligned with each other, if the width of the door 11Af is denoted as L2, L2 = L1.

Similarly, the door 12Af includes a first plate 12A1 having a longitudinal shape, a second plate 12A2 having an approximately equivalent shape as the first plate 12A1, and a sub door hinge 12A3 that connects the first plate 12A1 and the second plate 12A2. The first plate 12A1 is connected pivotably by the door hinger 12h to the supporting portion 14c. A door lock (not shown) is disposed on the second plate 12A2. In a state where the first plate 12A1 and the second plate 12A2 are aligned with each other, if the width of the door 12Af is denoted as L2, L2 = L1.

### (First Form)

In the first form of the private room structure 10A according to the present embodiment, by connecting the doors 11Af and 12Af to the rear walls 11e and 12e and locking the doors from the inside, the lavatory private room 11 and the lavatory private room 12 each having a small-sized and having their circumferences surrounded by walls can be used independently. Further, as illustrated in FIG. 5A, by releasing the door lock, and folding the first plate 11A1 and the second plate 11A2 to open the door 11Af, or folding the first plate 12A1 and the second plate 12A2 to open the door 12Af, the passenger can enter and exit the lavatory private room 11 or the lavatory private room 12 through the multi-use passage 15.

### (Second Form)

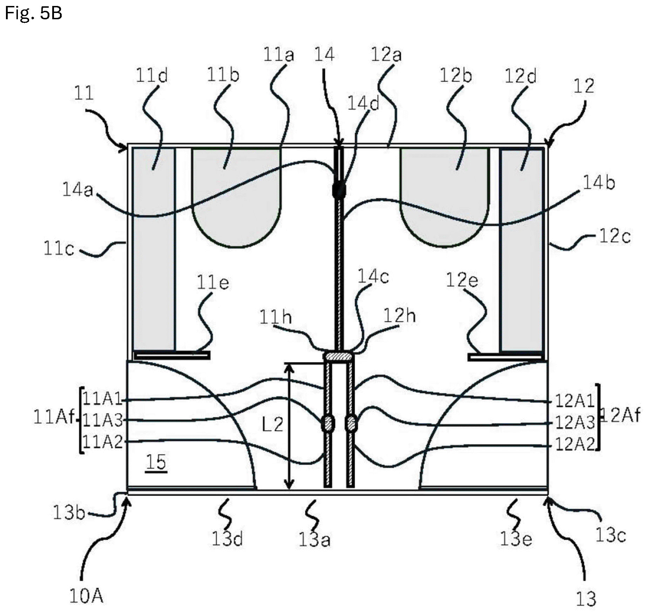

In the second form of the private room structure 10A according to the present embodiment, as illustrated in FIG. 5B, the doors 11Af and 12Af can be rotated to the fixed partition wall 13a side and fixed via door locks to the fixed partition wall 13a. Since the width L2 of the doors 11Af and 12Af is equal to the width L1 of the multi-use passage 15, there is very little gap between the locked doors 11Af and 12Af and the fixed partition wall 13a, such that the lavatory private room 11 and the lavatory private room 12 can be used in a state expanded to the multi-use passage 15 side and used as a middle-sized lavatory private room. The lavatory private room 11 and the lavatory private room 12 can be closed or opened by the passage doors 13d and 13e.

### (Third Form)

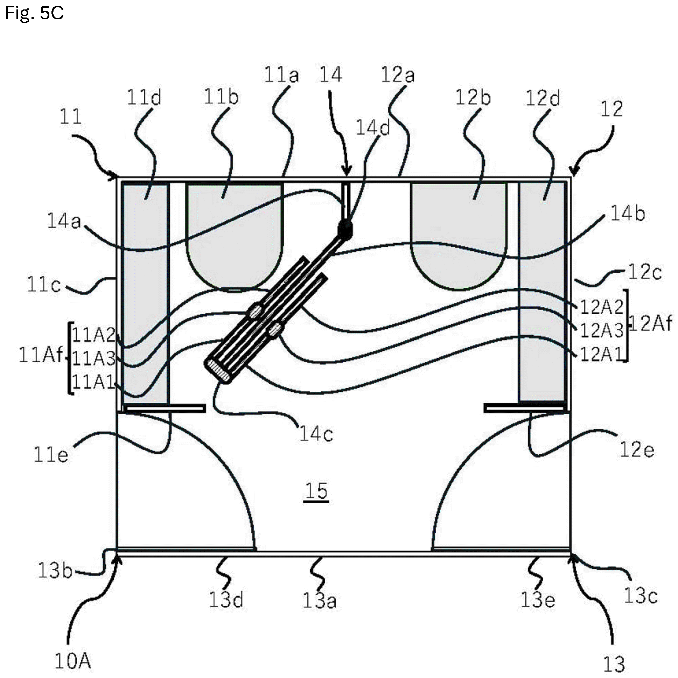

In the third form of the private room structure 10A according to the present embodiment, as illustrated in FIG. 5C, the doors 11Af and 12Af are adhered closely with both sides of the fixed wall 14a and fixed thereto by a fixture, a strap or the like, and the lock mechanism 16 is released to rotate the movable wall 14b toward the lavatory private room 11 side. Thereby, the space of the lavatory private room 12 can be expanded further to realize a large-sized lavatory.

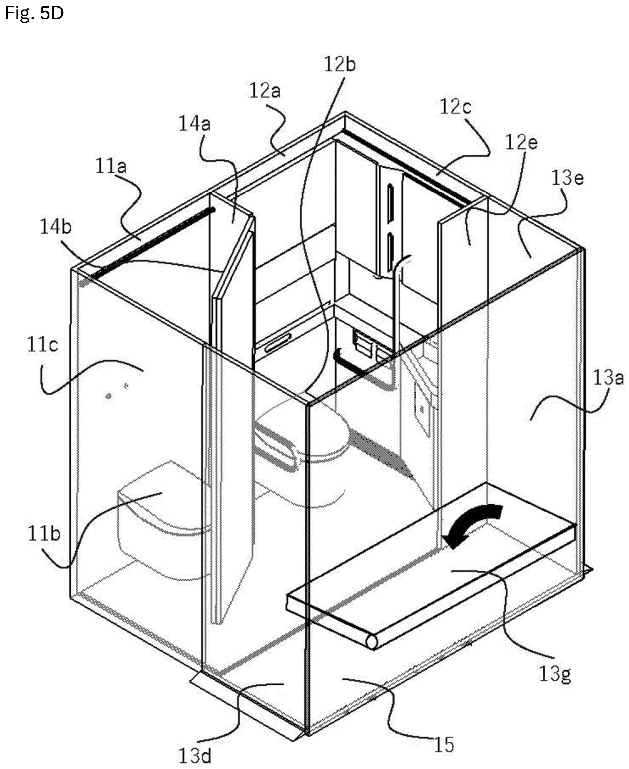

Further, according to the third form of the private room structure 10A according to the present embodiment, or the first embodiment, as illustrated in FIG. 5D, a folding-type cot bed 13g can be disposed upright against the passage door 13e. If there is a passenger who is not feeling well, the cot bed 13g can be opened and placed on the multi-use passage 15, and the passenger can lie down on the cot bed 13g. Thereby, the expanded lavatory private room 12 can be used as a first aid room.

### (Third Embodiment)

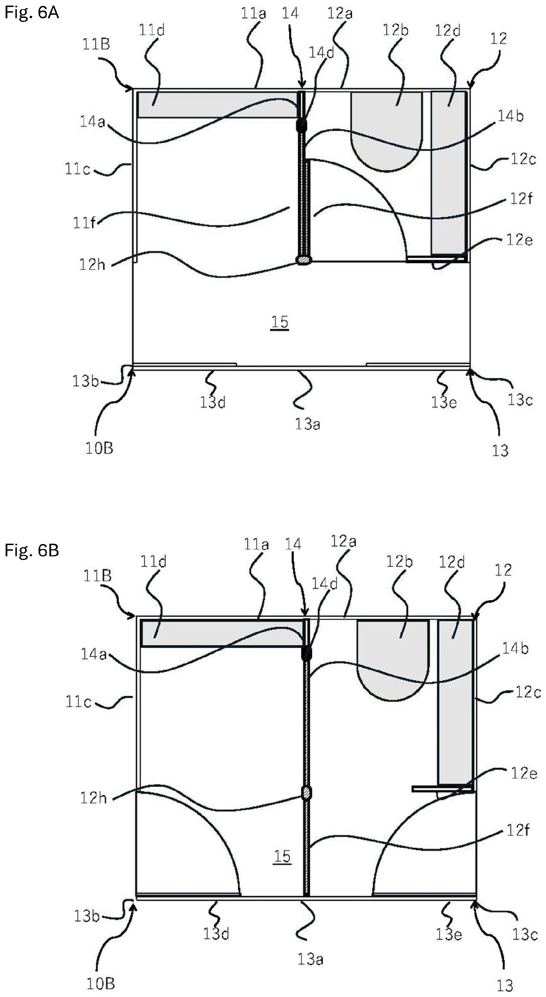

FIGs. 6A to 6C are each a plan view in which a private room structure 10B according to a third embodiment is shown in enlarged view. The present embodiment includes the lavatory private room 12, the intermediate wall 14, the multi-use passage 15, and the partition 13 that are common to the first embodiment, but the point that a powder room 11B is disposed adjacent to the lavatory private room 12 differs. The intermediate wall 14 does not have the supporting portion 14c, and the door 12f is connected to the movable wall 14b via the door hinge 12h, but it may also be possible to have the supporting portion 14c disposed to connect the door 12f thereto, similar to the first embodiment.

The powder room 11B is surrounded by the front wall 11a, the side wall 11c, and the intermediate wall 14, but it does not have a rear wall and a door, such that it is communicated with the multi-use passage 15. The washbasin 11d and a mirror are disposed on the front wall 11a. It is preferable for a width of the washbasin 11d, i.e., length thereof in the travelling direction, to be smaller than a width of the fixed wall 14a. Instead of the powder room 11B, it may be possible to provide a nursing room, a fitting room, a calm down/cool down space, a first aid room and so on, which are non-lavatory private rooms.

### (First Form)

In the first form of the private room structure 10B according to the present embodiment, by connecting the door 12f to the rear wall 12e and locking the door from the inside, a small-sized lavatory private room 12 having its circumference surrounded by walls can be used, similar to the first embodiment. Further, as illustrated in FIG. 6A, by releasing the door lock and opening the door 12f, the passenger can enter and exit the lavatory private room 12 through the multi-use passage 15. Since the powder room 11B does not have a door, the passenger can enter and exit the powder room 11B freely through the multi-use passage 15. However, by rotating the passage doors 13d and 13e with respect to the fixed partition wall 13a and connecting and locking the same on the side walls 11c and 12c, i.e., covering a gap therebetween, the privacy of the powder room 11B can be ensured.

### (Second Form)

In the second form of the private room structure 10B according to the present embodiment, as illustrated in FIG. 6B, the door 12f can be rotated to the fixed partition wall 13a side and fixed via door locks to the fixed partition wall 13a. Since the width L2 of the door 12f is equal to the width L1 of the multi-use passage 15, there is very little gap between the locked door 12f and the fixed partition wall 13a, such that the lavatory private room 12 can be used in a state expanded to the multi-use passage 15 side and used as a middle-sized lavatory private room without deteriorating privacy, similar to the first embodiment. The lavatory private room 12 can be closed or opened by the passage door 13e.

In this state, the passage door 13d can be rotated with respect to the fixed partition wall 13a, connected to the side wall 11c, and locked from the inner side. Since the multi-use passage 15 is covered by the door 12f, the privacy of the powder room 11B can be ensured by locking the passage door 13d.

### (Third Form)

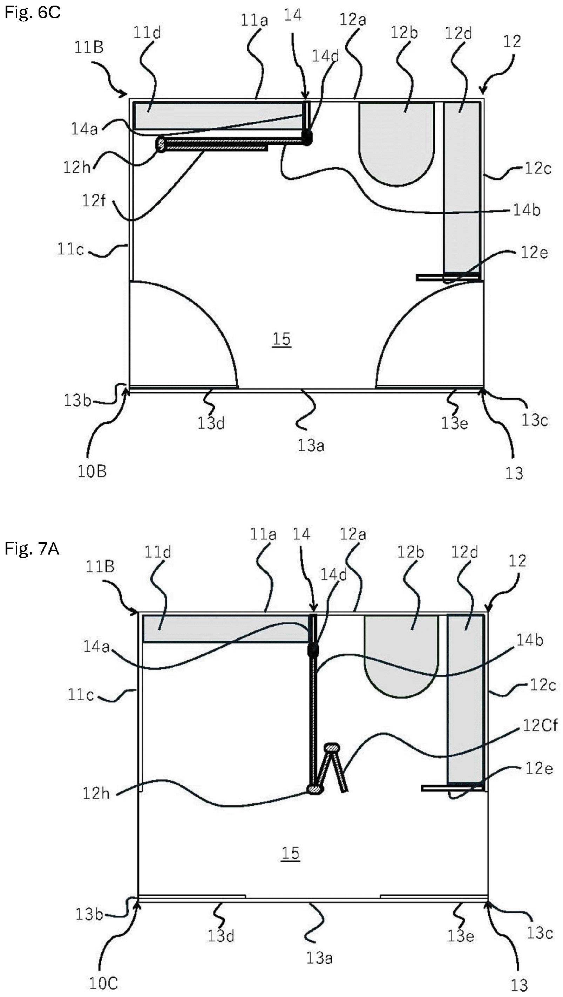

In the third form of the private room structure 10B according to the present embodiment, as illustrated in FIG. 6C, the door 12f is adhered closely to one side of the fixed wall 14a and fixed thereto by a fixture, a strap or the like, and the lock mechanism 16 is released to rotate the movable wall 14b toward the powder room 11B side. Since the powder room 11B does not include a toilet seat, the movable wall 14b can be rotated so as to be aligned with the washbasin 11d, such that a rotation angle of the movable wall 14b is increased compared to the first embodiment, by which the space of the lavatory private room 12 can be expanded further to realize a large-sized lavatory.

### (Fourth Embodiment)

FIGs. 7A to 7C are each a plan view in which a private room structure 10C according to a fourth embodiment is shown in enlarged view. The present embodiment differs from the second embodiment in that a door 12Cf of a bifold type is disposed in the lavatory private room 12. The door 12Cf has a similar configuration as the door 12Af. The powder room 11B is similar to that of the third embodiment.

### (First Form)

In the first form of the private room structure 10C according to the present embodiment, by connecting the door 12Cf to the rear wall 12e and locking the door from the inside, a small-sized lavatory private room 12 having its circumference surrounded by walls can be used, similar to the second embodiment. Further, as illustrated in FIG. 7A, by releasing the door lock and opening the door 12Cf, the passenger can enter and exit the lavatory private room 12 through the multi-use passage 15. Since the powder room 11B does not have a door, the passenger can enter and exit the powder room 11B freely through the multi-use passage 15. However, by rotating the passage doors 13d and 13e with respect to the fixed partition wall 13a and connecting and locking the same to the side walls 11c and 12c, i.e., covering a gap therebetween, the privacy of the powder room 11B can be ensured.

### (Second Form)

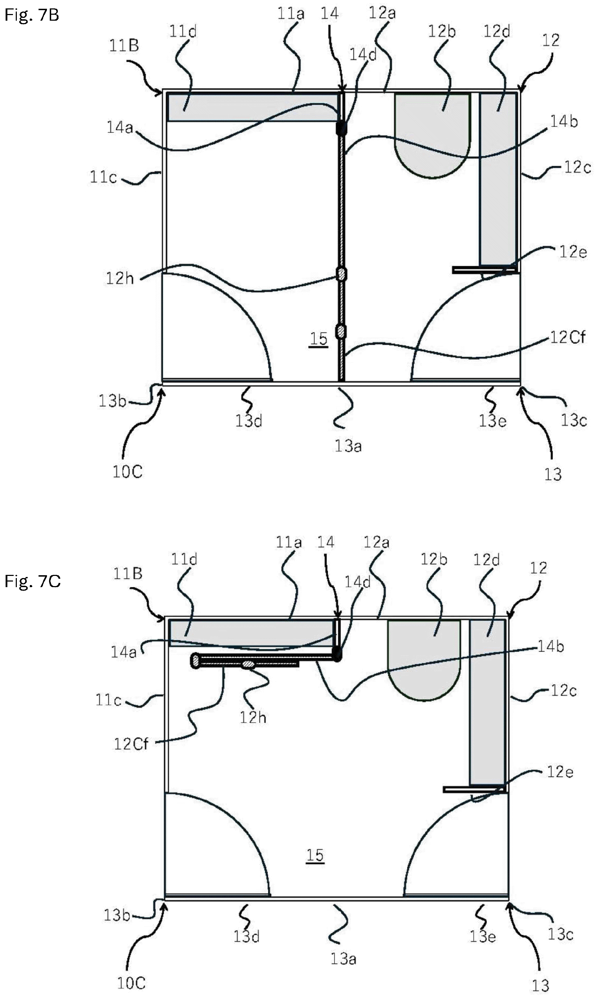

In the second form of the private room structure 10C according to the present embodiment, as illustrated in FIG. 7B, the door 12Cf can be rotated to the fixed partition wall 13a side and fixed to the fixed partition wall 13a using the lock mechanism 16. Since the width L2 of the door 12Cf in the extended state (refer to FIG. 5B) is equal to the width L1 of the multi-use passage 15, there is very little gap between the locked door 12Cf and the fixed partition wall 13a, such that the lavatory private room 12 can be used in a state expanded to the multi-use passage 15 side and used as a middle-sized lavatory private room, similar to the second embodiment. The lavatory private room 12 can be closed or opened by the passage door 13e.

In this state, the passage door 13d can be rotated with respect to the fixed partition wall 13a, connected to the side wall 11c, and locked from the inner side. Since the multi-use passage 15 is covered by the door 12Cf, the privacy of the powder room 11B can be ensured by locking the passage door 13d.

### (Third Form)

In the third form of the private room structure 10C according to the present embodiment, as illustrated in FIG. 7C, the door 12Cf is adhered closely to one side of the fixed wall 14a and fixed thereto by a fixture, a strap or the like, and the lock mechanism 16 is released to rotate the movable wall 14b toward the powder room 11B side. Since the powder room 11B does not include a toilet seat, the movable wall 14b can be rotated so as to be aligned with the washbasin 11d, such that a rotation angle of the movable wall 14b is increased compared to the first embodiment, by which the space of the lavatory private room 12 can be expanded further to realize a large-sized lavatory.

### (Fifth Embodiment)

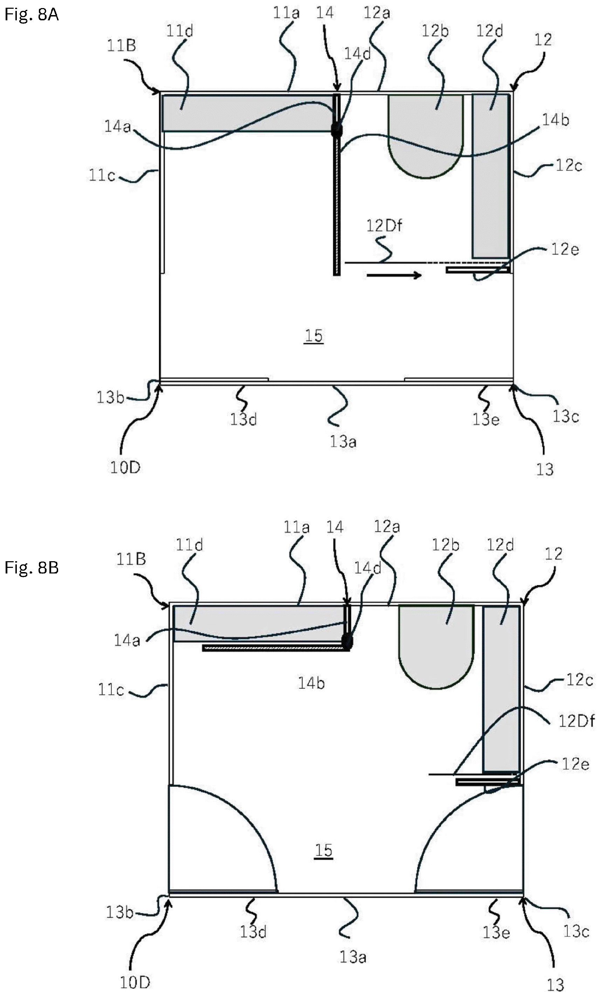

FIGs. 8A and 8B are each a plan view in which a private room structure 10D according to a fifth embodiment is shown in enlarged view. The present embodiment differs from the third embodiment in that a door 12Df which is a slide-type door, i.e., sliding door, is disposed on the rear wall 12e side, instead of connecting a door to the movable wall 14b.

### (First Form)

In the first form of the private room structure 10D according to the present embodiment, by sliding the door 12Df to the intermediate wall 14 side to cover a gap between the fixed movable wall 14b and the rear wall 11e, and connecting the door 12Df to the movable wall 14b and locking the door from the inside, a small-sized lavatory private room 12 having its circumference surrounded by walls can be used, similar to the third embodiment. Further, as illustrated in FIG. 8A, by releasing the door lock and opening the door 12Df by sliding the door to the rear wall 12e side, the passenger can enter and exit the lavatory private room 12 through the multi-use passage 15. Since the powder room 11B does not have a door, the passenger can enter and exit the powder room 11B freely through the multi-use passage 15. However, by rotating the passage doors 13d and 13e with respect to the fixed partition wall 13a and connecting and locking the same to the side walls 11c and 12c, i.e., covering a gap therebetween, the privacy of the powder room 11B can be ensured.

### (Second Form)

In the second form of the private room structure 10D according to the present embodiment, as illustrated in FIG. 8B, the door 12Df is slid to the rear wall 11e side and fixed thereto, the lock mechanism 16 is released, and the movable wall 14b is rotated to the powder room 11B side. Since the powder room 11B does not include a toilet seat, the movable wall 14b can be rotated so as to be aligned with the washbasin 11d, such that a rotation angle of the movable wall 14b is increased compared to the first embodiment, by which the space of the lavatory private room 12 can be expanded further to realize a large-sized lavatory. The large-sized lavatory private room 12 is surrounded by the front wall 12a, the fixed wall 14a, the movable wall 14b, the partition 13, and the side walls 11c and 12c, and includes the multi-use passage 15. By rotating the passage doors 13d and 13e with respect to the fixed partition wall 13a and connecting and locking the same to the side walls 11c and 12c, i.e., covering a gap therebetween, the privacy of the lavatory private room 12 can be ensured.

### (Sixth Embodiment)

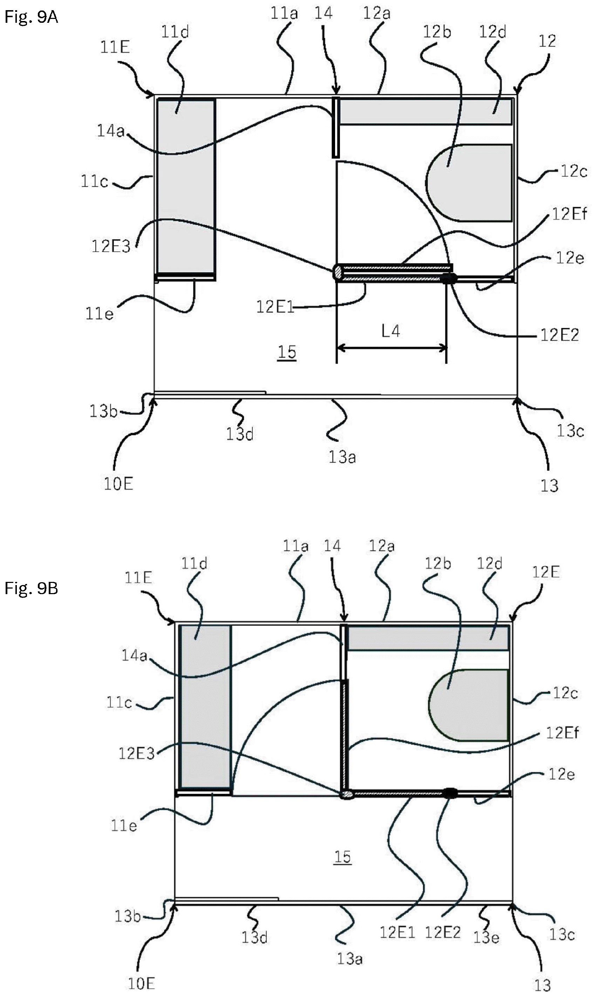

FIGs. 9A to 9C are each a plan view in which a private room structure 10E according to a sixth embodiment is shown in enlarged view. According to the present embodiment, arrangements of interior components within a powder room 11E and a lavatory private room 12E differ from the third embodiment, but the multi-use passage 15 and the partition 13 are common.

In the powder room 11E, the washbasin 11d is disposed from the front wall 11a to the rear wall 11e in a state closely adhered to the side wall 11c.

The lavatory private room 12E has only the fixed wall 14a serving as the intermediate wall 14E. The washbasin 12d is disposed from the fixed wall 14a to the side wall 12c in a state closely adhered to the front wall 12a. The toilet seat 12b is attached to the side wall 12c adjacent to the washbasin 12d. It is sufficient that the partition 13 includes the passage door 13d, but it may also include the passage door 13e, similar to the embodiment described above.

A side edge of the rear wall 12e is connected to one of the side edges of a movable wall 12E1 via a hinge 12E2, and the movable wall 12E1 is rotatable with respect to the rear wall 12e. Further, a door 12Ef is connected rotatably to the other side edge of the movable wall 12E1 via a hinge 12E3. The hinges 12E2 and 12E3 each has a rotational axis perpendicular to the floor. The movable wall 12E1 includes the lock mechanism 16, and in a state where the width of the movable wall 12E1 is set to L4, L4 is approximately equal to L1. The door 12Ef has a door lock (not shown).

### (First Form)

In the first form of the private room structure 10E according to the present embodiment, the movable wall 12E1 is fixed to the ceiling and the floor by the lock mechanism 16. Thereby, by connecting the door 12Ef to the fixed wall 14a and locking the door from the inside, a small-sized lavatory private room 12E having its circumference surrounded by the front wall 12a, the fixed wall 14a, the door 12Ef, the side wall 12c, the rear wall 12e, and the movable wall 12E1 can be used. Further, as illustrated in FIG. 9A, by releasing the door lock and opening the door 12Ef, the passenger can enter and exit the lavatory private room 12E through the powder room 11E. Since the powder room 11E does not have a door, the passenger can enter and exit the powder room 11E freely through the multi-use passage 15.

### (Second Form)

In the second form of the private room structure 10E according to the present embodiment, as illustrated in FIG. 9B, the door 12Ef can be rotated to the rear wall 11e side of the powder room 11E, and by connecting the door 12Ef to the rear wall 11e and locking the same from the inside, the lavatory private room 12E surrounded by the front wall 12a, the side wall 11c, the rear wall 11e, the side wall 12c, the rear wall 12e, the movable wall 12E1, and the door 12Ef can be formed. Thereby, the lavatory private room 12E can be expanded to include the powder room 11E and used as a middle-sized lavatory private room.

### (Third Form)

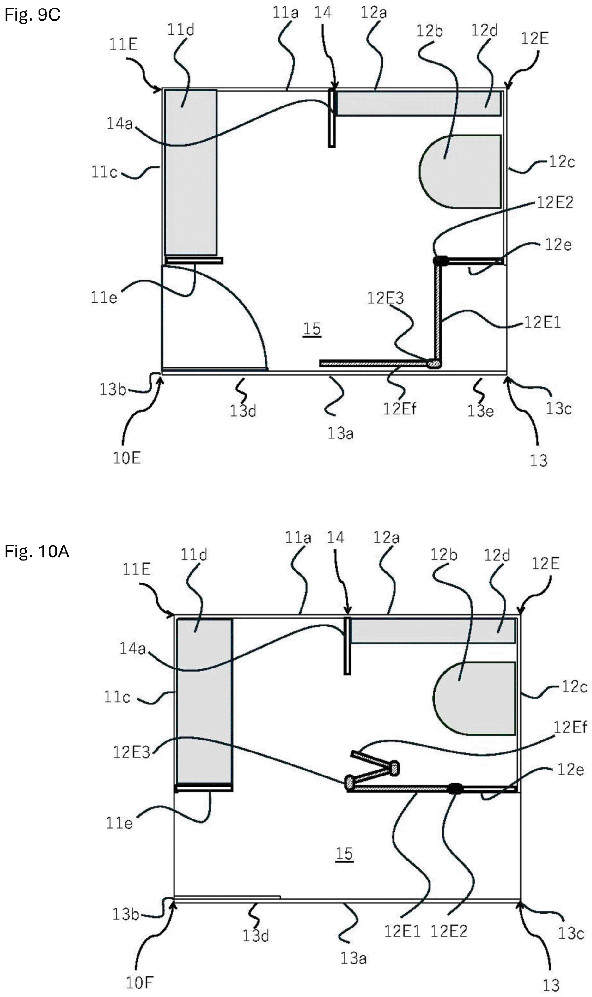

In the third form of the private room structure 10E according to the present embodiment, after releasing the lock mechanism 16 of the movable wall 12E1, the movable wall 12E1 is rotated by 90 degrees to the fixed partition wall 13a side, as illustrated in FIG. 9C, and fixed by the lock mechanism 16, etc. Further, the door 12Ef is fixed in a state closely adhered to the fixed partition wall 13a by a fixture, a strap or the like not shown. Since a width L4 of the movable wall 12E1 is approximately equal to the width L1 of the multi-use passage 15, there is very little gap between the locked movable wall 12E1 and the fixed partition wall 13a, such that the lavatory private room 12E can be expanded further to the multi-use passage 15 side and used as a large-sized lavatory private room, without deteriorating privacy. In this state, the lavatory private room 12E is surrounded by the front walls 11a and 12a, the side walls 11c and 12c, the rear wall 12e, the movable wall 12E1, and the partition 13, includes a portion of the multi-use passage 15, and is closed or opened by the passage door 13d.

### (Seventh Embodiment)

FIGs. 10A to 10C are each a plan view in which a private room structure 10F according to a seventh embodiment is shown in enlarged view. According to the present embodiment, a door 12Ff is changed to a bifold type, but the other configurations are similar as the sixth embodiment. Further, the door 12Ff has a similar configuration as the door 12Af. In a state where a width of the door 12Ff in the extended state is referred to as L2, L2 = L1 (refer to FIG. 5B). The door 12Ff has a door lock (not shown).

### (First Form)

In the first form of the private room structure 10F according to the present embodiment, the movable wall 12E1 is fixed to the ceiling and the floor by the lock mechanism 16. Thereby, by connecting the door 12Ff to the movable wall 12E1 and locking the door from the inside, a small-sized lavatory private room 12E having its circumference surrounded by walls can be used, similar to the sixth embodiment. Further, as illustrated in FIG. 10A, by releasing the door lock and opening the door 12Ff, the passenger can enter and exit the lavatory private room 12E through the powder room 11E. Since the powder room 11E does not have a door, the passenger can enter and exit the powder room 11E freely through the multi-use passage 15.

### (Second Form)

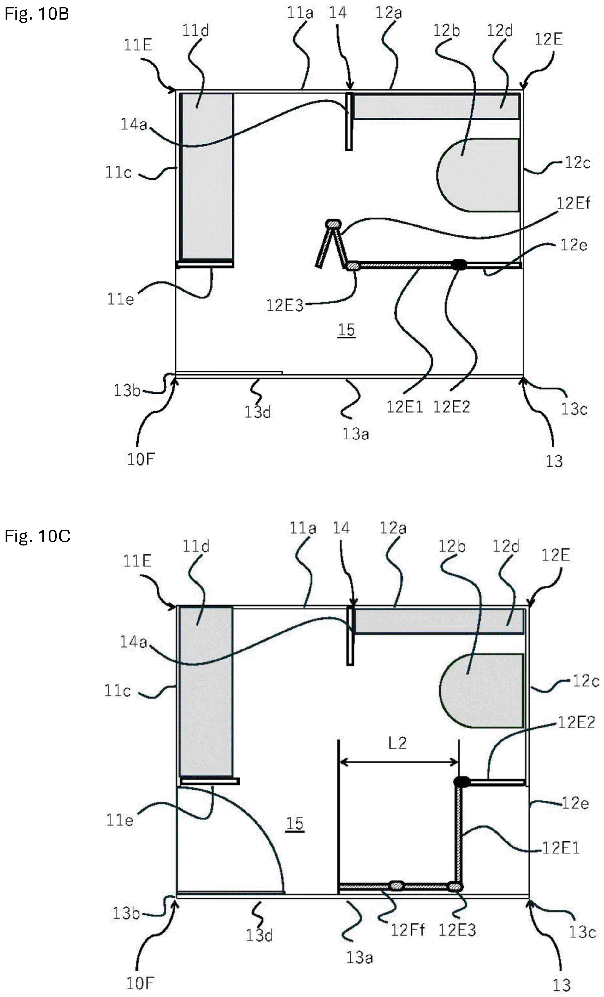

In the second form of the private room structure 10F according to the present embodiment, as illustrated in FIG. 10B, the door 12Ff can be rotated to the rear wall 11e side of the powder room 11E, and by connecting the door 12Ff to the rear wall 11e and locking the same from the inside, the lavatory private room 12E can be expanded to include the powder room 11E and used as a middle-sized lavatory private room.

### (Third Form)

In the third form of the private room structure 10F according to the present embodiment, after releasing the lock mechanism 16 of the movable wall 12E1, the movable wall 12E1 is rotated to the fixed partition wall 13a side, as illustrated in FIG. 10C, and fixed to the fixed partition wall 13a by the lock mechanism 16, etc. Further, the door 12Ff is fixed in a state closely adhered to the fixed partition wall 13a by a fixture, a strap or the like not shown. Since the width L4 of the movable wall 12E1 is approximately equal to the width L1 of the multi-use passage 15, there is very little gap between the locked movable wall 12E1 and the fixed partition wall 13a, such that the lavatory private room 12E can be expanded further to the multi-use passage 15 side and used as a large-sized lavatory private room, without deteriorating privacy. The lavatory private room 12E is closed and opened by the passage door 13d.

### (Eighth Embodiment)

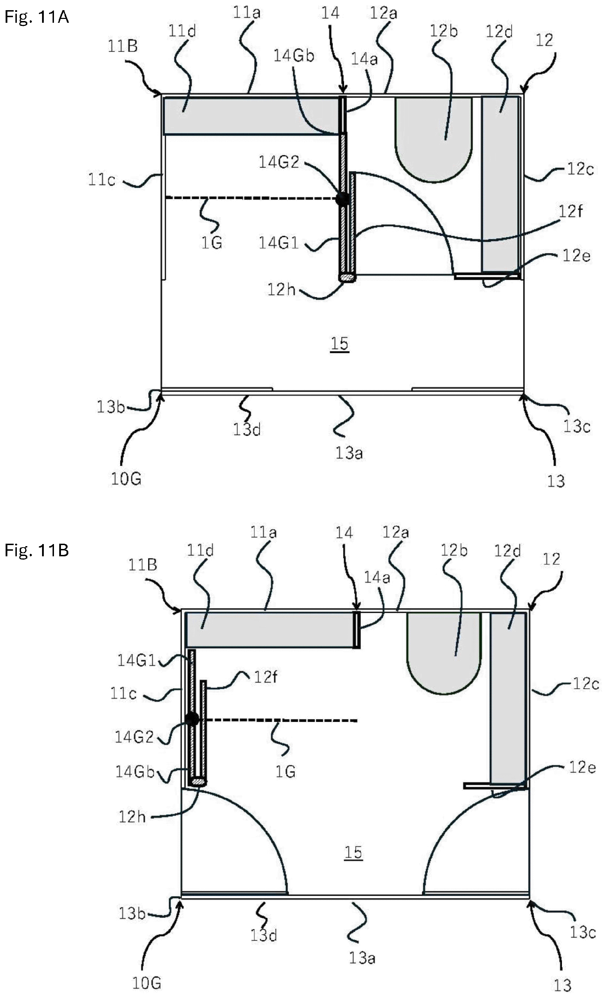

FIGs. 11A and 11B are each a plan view in which a private room structure 10G according to an eighth embodiment is shown in enlarged view. According to the present embodiment, a movable wall 14Gb of the intermediate wall 14 is changed with respect to the third embodiment, and the other configurations are similar. The door 12f is rotatable with respect to the movable wall 14Gb via the door hinge 12h.

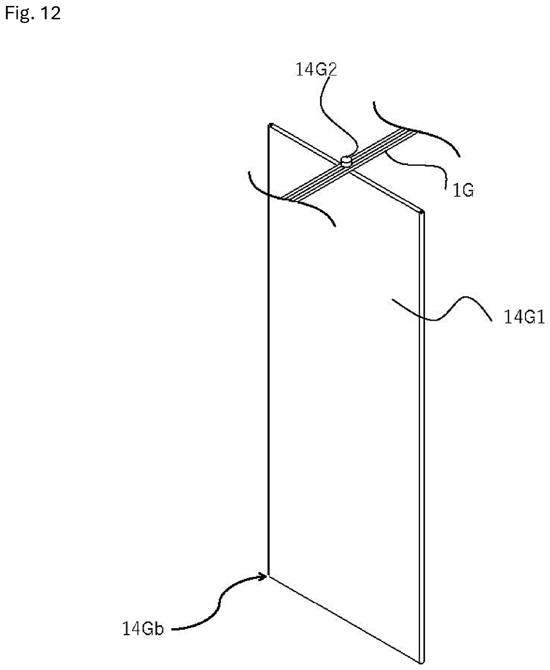

FIG. 12 is a perspective view schematically illustrating the movable wall 14Gb. In FIG. 12, the movable wall 14Gb includes a wall portion 14G1, and a slider 14G2 attached to a center of an upper edge of the wall portion 14G1. A curtain rail 1G is attached to the ceiling of the lavatory, i.e., private room structure, so as to extend from the lavatory private room 12 to the powder room 11B. The curtain rail 1G is a long member having a C-shaped cross section with its opening portion facing downward. The slider 14G2 has a T-shape that fits to the curtain rail 1G. In a state where the slider 14G2 is mounted to the curtain rail 1G, the wall portion 14G1 is supported in an erected state, and while maintaining the erected state, the slider 14G2 can be moved together with the wall portion 14G1 along the curtain rail 1G. Although not shown, the wall portion 14G1 includes the lock mechanism 16.

### (First Form)

In the first form of the private room structure 10G according to the present embodiment, the movable wall 14Gb is fixed to the ceiling and the floor by the lock mechanism 16, and the fixed wall 14a and the movable wall 14Gb are in a connected state. Thereby, as illustrated in FIG. 11A, by connecting the door 12f to the rear wall 12e and locking the door from the inside, a small-sized lavatory private room 12 having its circumference surrounded by walls can be used, similar to the third embodiment. Since the powder room 11B does not have a door, the passenger can enter and exit the powder room 11B freely through the multi-use passage 15. However, by rotating the passage doors 13d and 13e with respect to the fixed partition wall 13a and connecting and locking the same to the side walls 11c and 12c, i.e., covering a gap therebetween, the privacy of the powder room 11B can be ensured.

### (Second Form)

In the second form of the private room structure 10G according to the present embodiment, by releasing the lock mechanism 16 of the movable wall 14Gb, as illustrated in FIG. 11B, the movable wall 14Gb is moved along the curtain rail 1G to be closely adhered to the side wall 11c, and fixed together with the door 12f to the side wall 11c by a fixture, a strap or the like not shown. Thereby, the lavatory private room 12 can be expanded to the powder room 11B and the multi-use passage 15 side and used as a large-sized lavatory private room, without deteriorating privacy. By rotating the passage doors 13d and 13e with respect to the fixed partition wall 13a and connecting and locking the same to the side walls 11c and 12c, i.e., covering a gap therebetween, the privacy of the lavatory private room 12 can be ensured.

### (Ninth Embodiment)

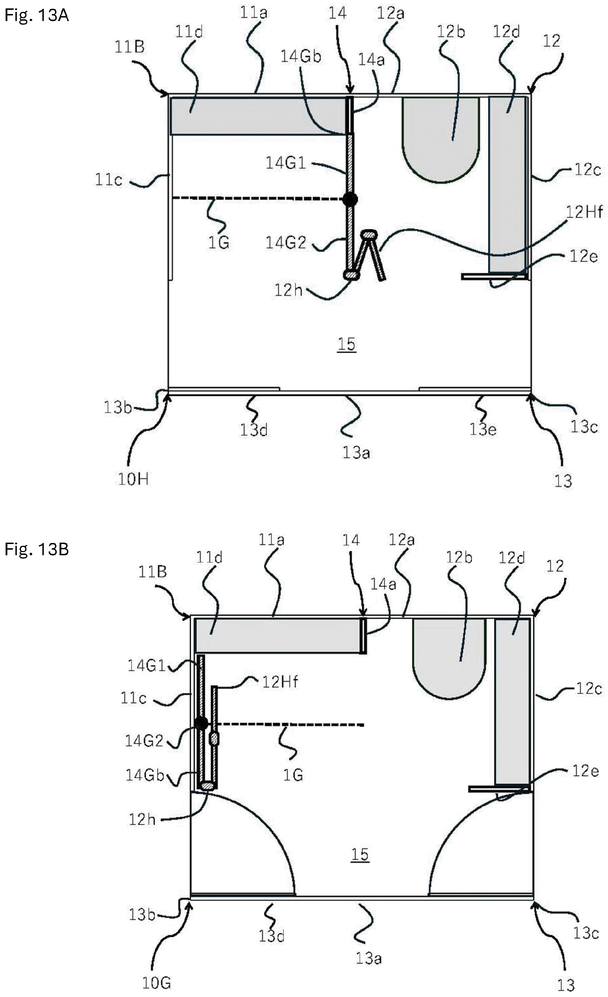

FIGs. 13A and 13B are each a plan view in which a private room structure 10H according to a ninth embodiment is shown in enlarged view. According to the present embodiment, a door 12Hf is changed to a bifold type with respect to the eighth embodiment, and the other configurations are similar. The door 12Hf has a similar configuration as the door 12Af.

### (First Form)

In the first form of the private room structure 10H according to the present embodiment, the movable wall 14Gb is fixed to the ceiling and the floor by the lock mechanism 16, and the fixed wall 14a and the movable wall 14Gb are in a connected state. Thereby, as illustrated in FIG. 13A, by connecting the door 12Hf to the rear wall 12e and locking the door from the inside, a small-sized lavatory private room 12 having its circumference surrounded by walls can be used, similar to the eighth embodiment. Since the powder room 11B does not have a door, the passenger can enter and exit the powder room 11B freely through the multi-use passage 15. However, by rotating the passage doors 13d and 13e with respect to the fixed partition wall 13a and connecting and locking the same to the side walls 11c and 12c, i.e., covering a gap therebetween, the privacy of the powder room 11B can be ensured.

### (Second Form)

In the second form of the private room structure 10H according to the present embodiment, by releasing the lock mechanism 16 of the movable wall 14Gb, as illustrated in FIG. 13B, the movable wall 14Gb is moved along the curtain rail 1G to be closely adhered to the side wall 11c, and fixed together with the door 12Hf to the side wall 11c by a fixture, a strap or the like not shown. Thereby, the lavatory private room 12 can be expanded to the powder room 11B and the multi-use passage 15 side and used as a large-sized lavatory private room, without deteriorating privacy. By rotating the passage doors 13d and 13e with respect to the fixed partition wall 13a and connecting and locking the same to the side walls 11c and 12c, i.e., covering a gap therebetween, the privacy of the lavatory private room 12 can be ensured.

### (Tenth Embodiment)

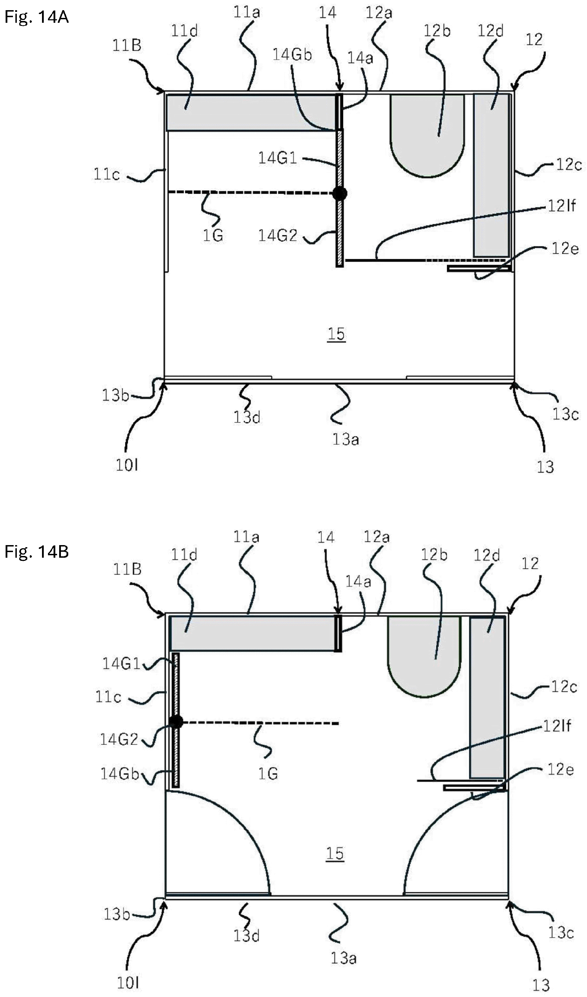

FIGs. 14A and 14B are each a plan view in which a private room structure 10I according to a tenth embodiment is shown in enlarged view. According to the present embodiment, a door 12If is changed to a sliding type with respect to the eighth embodiment, and the other configurations are similar.

### (First Form)

In the first form of the private room structure 10I according to the present embodiment, the movable wall 14Gb is fixed to the ceiling and the floor by the lock mechanism 16, and the fixed wall 14a and the movable wall 14Gb are in a connected state. Thereby, as illustrated in FIG. 14A, by sliding the door 12If to the movable wall 14Gb side, connecting the same, and locking the door from the inside, a small-sized lavatory private room 12 having its circumference surrounded by walls can be used, similar to the eighth embodiment. Since the powder room 11B does not have a door, the passenger can enter and exit the powder room 11B freely through the multi-use passage 15. However, by rotating the passage doors 13d and 13e with respect to the fixed partition wall 13a and connecting and locking the same to the side walls 11c and 12c, i.e., covering a gap therebetween, the privacy of the powder room 11B can be ensured.

### (Second Form)

In the second form of the private room structure 10I according to the present embodiment, by sliding the door 12If to the rear wall 12e side, fixing the same, and releasing the lock mechanism 16 of the movable wall 14Gb, as illustrated in FIG. 14B, the movable wall 14Gb is moved along the curtain rail 1G to be closely adhered to the side wall 11c, and fixed to the side wall 11c by a fixture, a strap or the like not shown. Thereby, the lavatory private room 12 can be expanded to the powder room 11B and the multi-use passage 15 side and used as a large-sized lavatory private room, without deteriorating privacy. By rotating the passage doors 13d and 13e with respect to the fixed partition wall 13a and connecting and locking the same to the side walls 11c and 12c, i.e., covering a gap therebetween, the privacy of the lavatory private room 12 can be ensured.

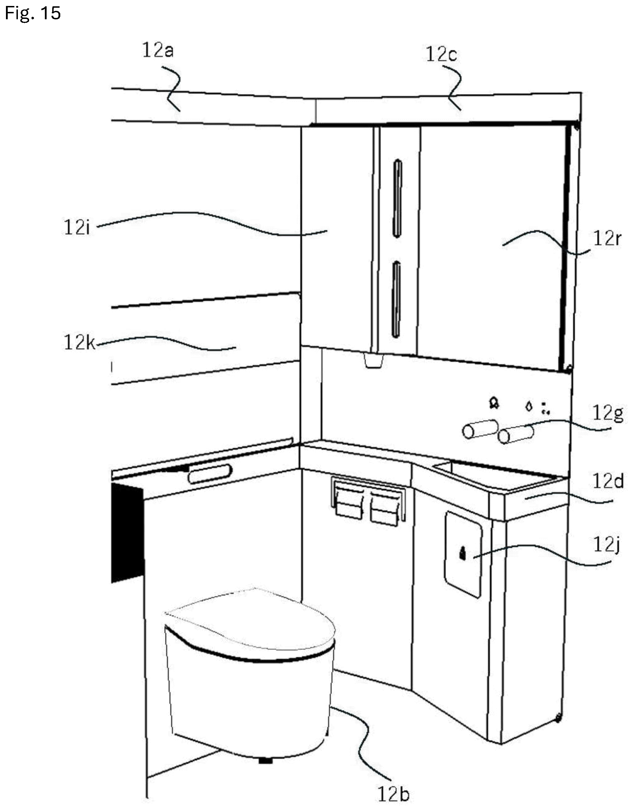

FIG. 15 is a view illustrating an example of interior components installed in the lavatory private room 12. As illustrated in FIG. 15, in addition to the toilet seat 12b attached to the front wall 12a and the washbasin 12d attached to the side wall 12c, a water tap 12g, a mirror 12r and the like disposed on the side wall 11c above the washbasin 12d, and a storage 12i for lavatory equipment can be equipped in the lavatory private room 12, and a trash can 12j can be disposed below the washbasin 12d.

Further, a diaper changing stand 12k that is accommodated in the front wall 12a when the toilet seat 12b is used and that can be drawn out and used for changing diapers of infants can be disposed above the toilet seat 12b. Similar interior components can be installed in the lavatory private room 11.

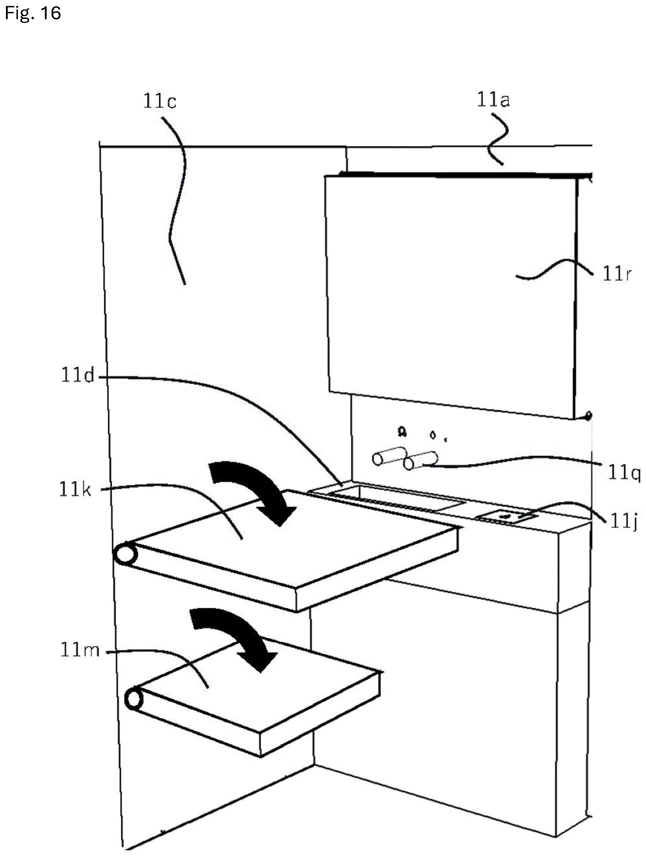

FIG. 16 illustrates an example of interior components installed in the powder room 11B. As illustrated in FIG. 16, in addition to the washbasin 11d attached to the front wall 11a, a water tap 11q, a mirror 11r and the like disposed on the front wall 11a above the washbasin 11d, can be installed in the powder room 11B, and a trash can 11j can be disposed next to the washbasin 11d. It may be possible to dispose a rolling screen on an upper portion of the front wall 11a, and to pull down the rolling screen according to need to hide the washbasin 11d or the trash can 11j.

Further, a diaper changing stand 11k that can be accommodated in the side wall 11c and that can be drawn out and used for changing diapers of infants can be disposed. Further, a foldable chair 11m that can be accommodated in the side wall 11c and that can be drawn out can be disposed below the diaper changing stand 11k. Either one of the diaper changing stand 11k and the foldable chair 11m can be selectively drawn out and used.

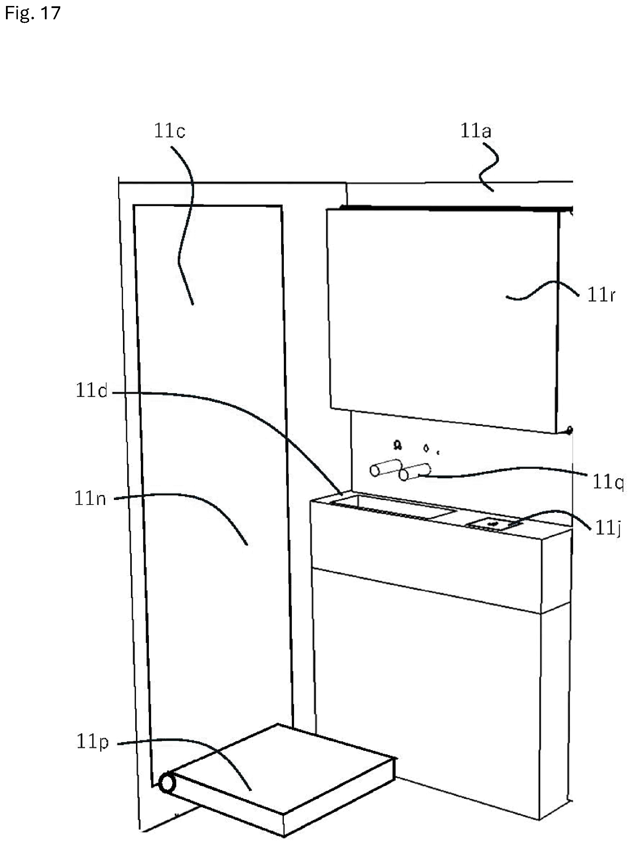

FIG. 17 is a view illustrating another example of interior components installed in the powder room 11B. As illustrated in FIG. 17, a full-length mirror 11n can be disposed on the side wall 11c, and a fitting board 11p that can be drawn out for use can be disposed on the lower end of the full-length mirror 11n in the powder room 11B. The passenger can take off his/her shoes and stand on the fitting board 11p to visually confirm his/her own reflection on the full-length mirror 11n. The interior components described above can be installed in a similar manner in any of the embodiments described above.

The present embodiment is not limited to the embodiments described above. A portion of components can be added to, deleted from, or replaced within the scope of the present invention.

The present specification includes the following disclosure of the invention.

### (First Aspect)

A private room structure capable of being mounted in an aircraft, the private room structure including:
an outer shell including at least a front wall and a pair of side walls that intersect the front wall, and installed in a fuselage of the aircraft;
a variable wall including a fixed wall connected to the outer shell, and a movable wall configured movably with respect to the fuselage;
a partition installed in the fuselage in a manner separated from the outer shell and facing the front wall on a side opposite from the front wall with the side walls interposed therebetween;
a multi-use passage formed between the outer shell and the partition; and
a door that serves as a wall and that is configured to cover a gap between the movable wall and the outer shell.

### (Second Aspect)

A private room structure capable of being mounted in an aircraft, the private room structure including:
an outer shell including a front wall, a first side wall and a second side wall that intersect the front wall, a first rear side wall joined to the first side wall, and a second rear side wall joined to the second side wall, the outer shell being installed in a fuselage of the aircraft;
a variable wall including a fixed wall connected to the front wall, and a movable wall configured movably with respect to the outer shell;
a partition installed in the fuselage in a manner separated from the outer shell and facing the front wall on a side opposite from the front wall with the outer shell interposed therebetween;
a multi-use passage formed between the outer shell and the partition; and
a door that serves as a wall and that is configured to be opened and closed,
wherein, in a state where the door that serves as a wall covers a gap between the second rear side wall and the movable wall, a small-sized main lavatory private room surrounded by the front wall, the variable wall, the second side wall, the second rear side wall, and the door that serves as a wall is formed, and
wherein, by connecting the door that serves as a wall to the partition, a middle-sized main lavatory private room surrounded by the front wall, the variable wall, the door that serves as a wall, the partition, and the second side wall, and including a portion of the multi-use passage is formed.

### (Third Aspect)

The private room structure capable of being mounted in an aircraft according to the second aspect,
wherein by moving the movable wall to the first side wall side, a large-sized main lavatory private room including an entirety of the multi-use passage is formed.

### (Fourth Aspect)

The private room structure capable of being mounted in an aircraft according to the third aspect, further including;
a passage door configured to cover a gap between both ends of the partition and the outer shell.

### (Fifth Aspect)

The private room structure capable of being mounted in an aircraft according to any one of the second to fourth aspects,
wherein the movable wall is connected to the fixed wall via a hinge, and configured to rotate with respect to the fixed wall.

### (Sixth Aspect)

The private room structure capable of being mounted in an aircraft according to any one of the second to fifth aspects,
wherein the door that serves as a wall is connected to the movable wall via a hinge, and configured rotatably with respect to the movable wall.

### (Seventh Aspect)

The private room structure capable of being mounted in an aircraft according to any one of the second to sixth aspects, further including:
a door configured to cover a gap between the first rear side wall and the movable wall, wherein by covering a gap between the first rear side wall and the movable wall by the door, a small-sized sub lavatory private room surrounded by the front wall, the variable wall, the first side wall, the first rear side wall, and the door is formed, and
wherein, by connecting the door to the partition, a middle-sized sub lavatory private room surrounded by the front wall, the variable wall, the door, the partition, and the first side wall and including a portion of the multi-use passage is formed.

### (Eighth Aspect)

A private room structure capable of being mounted in an aircraft, the private room structure including:
an outer shell including a front wall, a first side wall and a second side wall that intersect the front wall, a first rear side wall joined to the first side wall, and a second rear side wall joined to the second side wall, the outer shell being installed in a fuselage of the aircraft;
a variable wall including a fixed wall connected to the front wall, and a movable wall configured movably with respect to the fixed wall;
a partition installed in the fuselage in a manner separated from the outer shell and facing the front wall on a side opposite from the front wall with the outer shell interposed therebetween;
a multi-use passage formed between the outer shell and the partition; and
a sliding door configured to cover a gap between the movable wall and the second rear side wall,
wherein, in a state where the fixed wall and the movable wall are connected, when the sliding door covers a gap between the second rear side wall and the movable wall, a small-sized main lavatory private room surrounded by the front wall, the variable wall, the second side wall, the second rear side wall, and the sliding door is formed, and
wherein, by moving the movable wall to the first side wall side, a large-sized main lavatory private room surrounded by the front wall, the variable wall, the partition, and the second side wall, and including at least a portion of the multi-use passage is formed.

### (Ninth Aspect)

The private room structure capable of being mounted in an aircraft according to the eighth aspect, further including;
a passage door configured to cover a gap between both ends of the partition and the outer shell.

### (Tenth Aspect)

The private room structure capable of being mounted in an aircraft according to the eighth or ninth aspect,
wherein the movable wall is connected rotatably to the fixed wall.

### (Eleventh Aspect)

The private room structure capable of being mounted in an aircraft according to the eighth or ninth aspect,
wherein the movable wall is configured slidably along a rail disposed on a ceiling.

### (Twelfth Aspect)

A private room structure capable of being mounted in an aircraft, the private room structure including:
an outer shell including a front wall, a first side wall and a second side wall that intersect the front wall, a first rear side wall joined to the first side wall, and a second rear side wall joined to the second side wall, the outer shell being installed in a fuselage of the aircraft;
a fixed wall connected to the front wall;
a movable wall configured slidably along a rail disposed on a ceiling;
a partition installed in the fuselage in a manner separated from the outer shell and facing the front wall on a side opposite from the front wall with the outer shell interposed therebetween;
a multi-use passage formed between the outer shell and the partition; and
a door configured to cover a gap between the movable wall and the second rear side wall,
wherein, in a state where the fixed wall and the movable wall are connected, when the door covers a gap between the second rear side wall and the movable wall, a small-sized main lavatory private room surrounded by the front wall, the fixed wall, the variable wall, the second side wall, the second rear side wall, and the door is formed, and
wherein, by sliding the movable wall to the first side wall side, a large-sized main lavatory private room surrounded by the front wall, the movable wall, the partition, and the second side wall and including at least a portion of the multi-use passage is formed.

### (Thirteenth Aspect)

The private room structure capable of being mounted in an aircraft according to the twelfth aspect, further including;
a passage door configured to cover a gap between both ends of the partition and the outer shell.

### (Fourteenth Aspect)

The private room structure capable of being mounted in an aircraft according to the twelfth or thirteenth aspect,
wherein the door is connected to the movable wall via a hinge, and configured rotatably with respect to the movable wall.

### (Fifteenth Aspect)

The private room structure capable of being mounted in an aircraft according to the twelfth or thirteenth aspect,
wherein the door is configured slidably with respect to the second rear side wall.

### (Sixteenth Aspect)

A private room structure capable of being mounted in an aircraft, the private room structure including:
an outer shell including a front wall, a first side wall and a second side wall that intersect the front wall, a first rear side wall joined to the first side wall, and a second rear side wall joined to the second side wall, the outer shell being installed in a fuselage of the aircraft;
a fixed wall connected to the front wall;
a movable wall configured rotatably with respect to the second rear side wall;
a partition installed in the fuselage in a manner separated from the outer shell and facing the front wall on a side opposite from the front wall with the outer shell interposed therebetween;
a multi-use passage formed between the outer shell and the partition; and
a door configured rotatably with respect to the movable wall,
wherein, in a state where the door covers a gap between the fixed wall and the movable wall, a small-sized main lavatory private room surrounded by the front wall, the fixed wall, the door, the second side wall, the second rear side wall, and the movable wall is formed, and
wherein, by rotating the door and connecting the door to the first side wall, a middle-sized main lavatory private room surrounded by the front wall, the first side wall, the first rear side wall, the second side wall, the second rear side wall, the movable wall, and the door is formed.

### (Seventeenth Aspect)

The private room structure capable of being mounted in an aircraft according to the sixteenth aspect,
wherein, by connecting the movable wall to the partition, a large-sized main lavatory private room surrounded by the front wall, the first side wall, the second side wall, the second rear side wall, the movable wall, and the partition and including at least a portion of the multi-use passage is formed.

### (Eighteenth Aspect)

The private room structure capable of being mounted in an aircraft according to the sixteenth or seventeenth aspect, further including;
a passage door configured to cover a gap between an end portion of the partition and the first side wall.

### (Nineteenth Aspect)

The private room structure capable of being mounted in an aircraft according to any one of the sixteenth to eighteenth aspects,
wherein the door is connected to the movable wall via a hinge, and configured rotatably with respect to the movable wall.

### [Reference Signs List]

1 aircraft; 2 seat unit; 3 longitudinal aisle; 4 fuselage door; 10 private room structure; 11, 12 lavatory private room; 11B powder room; 13 partition; 14 intermediate wall; 15 multi-use passage

## Claims

1. A private room structure capable of being mounted in an aircraft, the private room structure comprising:
an outer shell including at least a front wall and a pair of side walls that intersect the front wall, and installed in a fuselage of the aircraft;
a variable wall including a fixed wall connected to the outer shell, and a movable wall configured movably with respect to the fuselage;
a partition installed in the fuselage in a manner separated from the outer shell and facing the front wall on a side opposite from the front wall with the side walls interposed therebetween;
a multi-use passage formed between the outer shell and the partition; and
a door that serves as a wall and that is configured to cover a gap between the movable wall and the outer shell.

2. A private room structure capable of being mounted in an aircraft, the private room structure comprising:
an outer shell including a front wall, a first side wall and a second side wall that intersect the front wall, a first rear side wall joined to the first side wall, and a second rear side wall joined to the second side wall, the outer shell being installed in a fuselage of the aircraft;
a variable wall including a fixed wall connected to the front wall, and a movable wall configured movably with respect to the outer shell;
a partition installed in the fuselage in a manner separated from the outer shell and facing the front wall on a side opposite from the front wall with the outer shell interposed therebetween;
a multi-use passage formed between the outer shell and the partition; and
a door that serves as a wall and that is configured to be opened and closed,
wherein, in a state where the door that serves as a wall covers a gap between the second rear side wall and the movable wall, a small-sized main lavatory private room surrounded by the front wall, the variable wall, the second side wall, the second rear side wall, and the door that serves as a wall is formed, and
wherein, by connecting the door that serves as a wall to the partition, a middle-sized main lavatory private room surrounded by the front wall, the variable wall, the door that serves as a wall, the partition, and the second side wall, and including a portion of the multi-use passage is formed.

3. The private room structure capable of being mounted in an aircraft according to Claim 2,
wherein by moving the movable wall to the first side wall side, a large-sized main lavatory private room including an entirety of the multi-use passage is formed.

4. The private room structure capable of being mounted in an aircraft according to Claim 3, further comprising;
a passage door configured to cover a gap between both ends of the partition and the outer shell.

5. The private room structure capable of being mounted in an aircraft according to Claim 2,
wherein the movable wall is connected to the fixed wall via a hinge, and configured rotatably with respect to the fixed wall.

6. The private room structure capable of being mounted in an aircraft according to Claim 2,
wherein the door that serves as a wall is connected to the movable wall via a hinge, and configured to rotate with respect to the movable wall.

7. The private room structure capable of being mounted in an aircraft according to Claim 2, further comprising:
a door configured to cover a gap between the first rear side wall and the movable wall, wherein by covering a gap between the first rear side wall and the movable wall by the door, a small-sized sub lavatory private room surrounded by the front wall, the variable wall, the first side wall, the first rear side wall, and the door is formed, and
wherein, by connecting the door to the partition, a middle-sized sub lavatory private room surrounded by the front wall, the variable wall, the door, the partition, and the first side wall and including a portion of the multi-use passage is formed.

8. A private room structure capable of being mounted in an aircraft, the private room structure comprising:
an outer shell including a front wall, a first side wall and a second side wall that intersect the front wall, a first rear side wall joined to the first side wall, and a second rear side wall joined to the second side wall, the outer shell being installed in a fuselage of the aircraft;
a variable wall including a fixed wall connected to the front wall, and a movable wall configured movably with respect to the fixed wall;
a partition installed in the fuselage in a manner separated from the outer shell and facing the front wall on a side opposite from the front wall with the outer shell interposed therebetween;
a multi-use passage formed between the outer shell and the partition; and
a sliding door configured to cover a gap between the movable wall and the second rear side wall,
wherein, in a state where the fixed wall and the movable wall are connected, when the sliding door covers a gap between the second rear side wall and the movable wall, a small-sized main lavatory private room surrounded by the front wall, the variable wall, the second side wall, the second rear side wall, and the sliding door is formed, and
wherein, by moving the movable wall to the first side wall side, a large-sized main lavatory private room surrounded by the front wall, the variable wall, the partition, and the second side wall, and including at least a portion of the multi-use passage is formed.

9. The private room structure capable of being mounted in an aircraft according to Claim 8, further comprising;
a passage door configured to cover a gap between both ends of the partition and the outer shell.

10. The private room structure capable of being mounted in an aircraft according to Claim 8,
wherein the movable wall is connected rotatably to the fixed wall.

11. The private room structure capable of being mounted in an aircraft according to Claim 8,
wherein the movable wall is configured slidably along a rail disposed on a ceiling.

12. A private room structure capable of being mounted in an aircraft, the private room structure comprising:
an outer shell including a front wall, a first side wall and a second side wall that intersect the front wall, a first rear side wall joined to the first side wall, and a second rear side wall joined to the second side wall, the outer shell being installed in a fuselage of the aircraft;
a fixed wall connected to the front wall;
a movable wall configured slidably along a rail disposed on a ceiling;
a partition installed in the fuselage in a manner separated from the outer shell and facing the front wall on a side opposite from the front wall with the outer shell interposed therebetween;
a multi-use passage formed between the outer shell and the partition; and
a door configured to cover a gap between the movable wall and the second rear side wall,
wherein, in a state where the fixed wall and the movable wall are connected, when the door covers a gap between the second rear side wall and the movable wall, a small-sized main lavatory private room surrounded by the front wall, the fixed wall, the variable wall, the second side wall, the second rear side wall, and the door is formed, and
wherein, by sliding the movable wall to the first side wall side, a large-sized main lavatory private room surrounded by the front wall, the movable wall, the partition, and the second side wall and including at least a portion of the multi-use passage is formed.

13. The private room structure capable of being mounted in an aircraft according to Claim 12, further comprising;
a passage door configured to cover a gap between both ends of the partition and the outer shell.

14. The private room structure capable of being mounted in an aircraft according to Claim 12,
wherein the door is connected to the movable wall via a hinge, and configured rotatably with respect to the movable wall.

15. The private room structure capable of being mounted in an aircraft according to Claim 12,
wherein the door is configured slidably with respect to the second rear side wall.

16. A private room structure capable of being mounted in an aircraft, the private room structure comprising:
an outer shell including a front wall, a first side wall and a second side wall that intersect the front wall, a first rear side wall joined to the first side wall, and a second rear side wall joined to the second side wall, the outer shell being installed in a fuselage of the aircraft;
a fixed wall connected to the front wall;
a movable wall configured rotatably with respect to the second rear side wall;
a partition installed in the fuselage in a manner separated from the outer shell and facing the front wall on a side opposite from the front wall with the outer shell interposed therebetween;
a multi-use passage formed between the outer shell and the partition; and
a door configured rotatably with respect to the movable wall,
wherein, in a state where the door covers a gap between the fixed wall and the movable wall, a small-sized main lavatory private room surrounded by the front wall, the fixed wall, the door, the second side wall, the second rear side wall, and the movable wall is formed, and
wherein, by rotating the door and connecting the door to the first side wall, a middle-sized main lavatory private room surrounded by the front wall, the first side wall, the first rear side wall, the second side wall, the second rear side wall, the movable wall, and the door is formed.

17. The private room structure capable of being mounted in an aircraft according to Claim 16,
wherein, by connecting the movable wall to the partition, a large-sized main lavatory private room surrounded by the front wall, the first side wall, the second side wall, the second rear side wall, the movable wall, and the partition and including at least a portion of the multi-use passage is formed.

18. The private room structure capable of being mounted in an aircraft according to Claim 16, further comprising;
a passage door configured to cover a gap between an end portion of the partition and the first side wall.

19. The private room structure capable of being mounted in an aircraft according to Claim 16,
wherein the door is connected to the movable wall via a hinge, and configured rotatably with respect to the movable wall.
